(19) Europäisches Patentamt
European Patent Office
Office européen des brevets

(11) EP 2 445 948 B1

(12) # EUROPÄISCHE PATENTSCHRIFT

(45) Veröffentlichungstag und Bekanntmachung des Hinweises auf die Patenterteilung:
**11.12.2013 Patentblatt 2013/50**

(21) Anmeldenummer: **10708926.0**

(22) Anmeldetag: **08.03.2010**

(51) Int Cl.:
***C08G 18/62*** (2006.01) ***C08G 18/77*** (2006.01)
***C08G 18/80*** (2006.01) ***C09D 175/04*** (2006.01)

(86) Internationale Anmeldenummer:
**PCT/EP2010/001422**

(87) Internationale Veröffentlichungsnummer:
**WO 2010/149236 (29.12.2010 Gazette 2010/52)**

(54) **BESCHICHTUNGSMITTEL UND DARAUS HERGESTELLTE BESCHICHTUNGEN MIT HOHER KRATZFESTIGKEIT BEI GLEICHZEITIG GUTEN ERGEBNISSEN IN DER PRÜFUNG DER ERICHSENTIEFUNG UND GUTEN STEINSCHLAGSCHUTZEIGENSCHAFTEN**

COATING AGENT AND COATINGS PRODUCED THEREFROM HAVING HIGH SCRATCH RESISTANCE WHILE YIELDING GOOD RESULTS IN THE ERICHSEN DEPTH TEST AND HAVING GOOD STONE CHIPPING RESISTANCE PROPERTIES

AGENTS DE REVÊTEMENT ET REVÊTEMENTS PRODUITS À PARTIR DE CEUX-CI AYANT UNE GRANDE RÉSISTANCE AUX RAYURES ET EN MÊME TEMPS DE BONS RÉSULTATS LORS DES ESSAIS D’EMBOUTISSAGE PROFOND D’ERICHSEN ET DE BONNES PROPRIÉTÉS DE RÉSISTANCE AUX IMPACTS DE GRAVILLONS

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **24.06.2009 DE 102009030481**

(43) Veröffentlichungstag der Anmeldung:
**02.05.2012 Patentblatt 2012/18**

(73) Patentinhaber: **BASF Coatings GmbH**
**48165 Münster (DE)**

(72) Erfinder: **GROENEWOLT, Matthijs**
**48147 Münster (DE)**

(74) Vertreter: **Leifert & Steffan**
**Patentanwälte**
**Burgplatz 21-22**
**40213 Düsseldorf (DE)**

(56) Entgegenhaltungen:
**WO-A1-2008/074489**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 445 948 B1

Printed by Jouve, 75001 PARIS (FR)

## Beschreibung

Die vorliegende Erfindung betrifft thermisch härtbare Beschichtungsmittel auf Basis aprotischer Lösemittel enthaltend hydroxylgruppenhaltige Polyacrylat- und/oder hydroxylgruppenhaltige Polymethacrylat-Polyole und Silangruppen enthaltende isocyanatgruppenhaltige Verbindungen (B).

In der WO 2001/98393 werden 2 K-Beschichtungsmittel beschrieben, welche ein Polyol als Bindemittelkomponente sowie als Vernetzerkomponente ein Polyisocyanat, welches in niedrigen Anteilen mit Alkoxysilylaminen, bevorzugt mit Bisalkoxysilylaminen, funktionalisiert ist, enthalten. Diese Beschichtungsmittel werden insbesondere als Primer eingesetzt und auf die Haftung auf metallischen Untergründen, bevorzugt auf Aluminium-Untergründen, optimiert. Hinsichtlich der Kratzfestigkeit bei gleichzeitig guter Erichsentiefung sowie guten Steinschlagschutzeigenschaften der resultierenden Beschichtungen sind diese Beschichtungsmittel nicht optimiert und es finden sich auch keine Angaben, wie diese Eigenschaften der resultierenden Beschichtungen gesteuert werden können.

Die US-A-2006/217472 beschreibt Beschichtungsmittel, welche ein hydroxylgruppenhaltiges Polyacrylat-und/ oder hydroxylgruppenhaltiges Polymethacrylat-Polyol, eine niedermolekulare Polyol-Komponente, ein Polyisocyanat sowie eine aminofunktionelle Alkoxysilyl-Komponente, bevorzugt Bisalkoxysilylamine, enthalten.

Solcherart beschriebene Systeme zeigen zwar kratzfeste Eigensschaften, jedoch führt die Verwendung von erhöhten Anteilen Bisalkoxysilanaminen meist zu Bewitterungsschwachen Systemen. Das beschriebene Acrylat weist zudem einen relativ hohen Styrolgehalt und hohe Anteile an Methacrylaten auf, was sich in niedrigen Werten bei der Erichsentiefung manifestieren dürfte.

In der EP-1 273 640 sind 2K-Beschichtungsmittel, bestehend aus einer Polyol - Komponente und einer Vernetzerkomponente, bestehend aus Polyisocyanaten, bei denen ein Teil der Isocyanatgruppen mit Bisalkoxysilylamin umgesetzt ist, beschrieben. Gemäß dieser Schrift sind alle Polyole mit mehr als zwei Hydroxylgruppen geeignet. Neben Polyester - Polyolen, Polycarbonat - Polyolen, Polyether - Polyolen sowie urethan-und ester-gruppenhaltigen Polyolen können auch Polyacrylat-beziehungsweise Polymethacrylat-Polyole eingesetzt werden. Angaben, welchen Einfluss die gewählten Bindemittel auf die Eigenschaften der resultierenden Beschichtungen haben, fehlen jedoch in dieser Schrift.

Diese Beschichtungsmittel können für die Automobilserienlackierung eingesetzt werden und weisen eine gute Kratzbeständigkeit bei gleichzeitig guter Beständigkeit gegen Umwelteinflüsse auf. Jedoch ist die Erichsentiefung der resultierenden Beschichtungen umso niedriger, je besser die Kratzbeständigkeit der resultierenden Beschichtungen ist. Angaben, wie Beschichtungen mit einer guten Kratzbeständigkeit, aber gleichzeitig einer zumindest ausreichenden Erichsentiefung und ohne signifikante Verschlechterung der Steinschlagschutzeigenschaften erhalten werden können, fehlen jedoch in dieser Schrift ebenso wie Angaben hinsichtlich der sogenannten Langzeit-Kratzbeständigkeit, also der Kratzbeständigkeit bei einer wiederholten Kratzbelastung.

Aus der WO 08/74491, WO 08/74490 und der WO 08/74489 sind 2K-Beschichtungsmittel, enthaltend Polyole, wie Polyesterpolyole, Polyurethanpolyole, Polysiloxanpolyole, bevorzugt hydroxylgruppenhaltige Polyacrylat-und/oder hydroxylgruppenhaltige Polymethacrylat-Polyole, und Polyisocyanate, bei denen ein Teil der Isocyanatgruppen mit einer Mischung aus Monoalkoxysilylamin und Bisalkoxysilylamin umgesetzt ist, bekannt. Diese Beschichtungsmittel weisen sowohl eine gute Kratzbeständigkeit als auch eine gute Witterungsbeständigkeit auf. Allerdings sind zur Erreichung einer sehr hohen Kratzbeständigkeit relativ hohe Silangehalte der Beschichtungsmittel erforderlich. Wünschenswert ist es daher, eine sehr hohe Kratzbeständigkeit auch bei niedrigeren Silangehalten zu erreichen beziehungsweise bei gleich bleibenden Silangehalten die Kratzfestigkeit weiter zu verbessern. Dabei sollten aber die anderen Eigenschaften der Beschichtung, insbesondere die guten Steinschlagschutzeigenschaften und die Erichsentiefung, nicht bzw. nicht wesentlich verschlechtert werden.

Aus der noch nicht offengelegten Patentanmeldung DE 10 2007 0 61 855.9-43 sind ebenfalls Beschichtungsmittel bekannt, die mindestens eine hydroxylgruppenhaltige Verbindung (A), mindestens eine isocyanatgruppenhaltige Verbindung (B) und mindestens einen phosphorhaltigen Katalysator enthalten, wobei ein oder mehrere Bestandteile des Beschichtungsmittels, bevorzugt die isocyanatgruppenhaltigen Verbindungen, hydrolysierbare Silangruppen in einer Menge von 2,5 bis 97,5 mol-%, jeweils bezogen auf die Summe aus Hydroxylgruppen, Isocyanatgruppen und hydrolysierbaren Silangruppen, aufweisen. Als erfindungswesentlichen Bestandteil enthalten diese Beschichtungsmittel als weiteren Katalysator mindestens ein bicyclisches Amin. Als hydroxylgruppenhaltige Verbindung werden Polyesterpolyole, Polyurethanpolyole, Polysiloxanpolyole, bevorzugt hydroxylgruppenhaltige Polyacrylat-und/oder hydroxylgruppenhaltige Polymethacrylat-Polyole, eingesetzt. Angaben, wie durch geeignete Auswahl der Bindemittel die Kratzfestigkeit der Beschichtungsmittel weiter verbessert werden kann, fehlen jedoch in dieser Schrift.

Die noch nicht offengelegten Patentanmeldung DE 10 2008 060454.2-43 beschreibt Beschichtungsmittel, die mindestens eine hydroxylgruppenhaltige Verbindung, mindestens eine isocyanatgruppenhaltige Verbindung mit hydrolysierbaren Silangruppen und mindestens einen phosphorhaltigen Katalysator enthalten. Es ist dabei zur Verbesserung des optischen Eindrucks erfindungswesentlich, dass als hydroxylgruppenhaltige Verbindung spezielle Polyester eingesetzt werden.

Ferner sind aus der EP-B-692 007 Beschichtungsmittel bekannt, die als Bindemittel hydroxylgruppenhaltige

Polyacrylate auf der Basis von 4-Hydroxy-butylacrylat beziehungsweise 4-Hydroxy-butyl-methacrylat und als Vernetzer Polyisocyanate enthalten. Die resultierenden Beschichtungen weisen eine gegenüber den bis dahin eingesetzten Beschichtungsmitteln verbesserte Kratzfestigkeit und eine gute Säurebeständigkeit auf. Die Verwendung von silanisierten Polyisocyanaten ist jedoch nicht beschrieben. Angaben, welchen Einfluss die Glasübergangstemperatur der gewählten Bindemittel auf die Eigenschaften der resultierenden Beschichtungen hat, fehlen jedoch in dieser Schrift ebenso wie Angaben, wie Beschichtungen mit einer weiter verbesserten Kratzfestigkeit bei gleichzeitig guter Erichsentiefung und guten Steinschlagschutzeigenschaften erhalten werden können.

Schließlich sind aus der WO07/016234 Beschichtungsmittel, insbesondere Klarlacke, bekannt, die gleichzeitig eine gute Kratzfestigkeit und gute Steinschlagschutzeigenschaften aufweisen. Erreicht wird dies dadurch, dass die entsprechenden Mehrschichtbeschichtungen bei Single-scratch Messungen eine Risskraft von mindestens 26 mN und eine plastische Deformationsbeständigkeit von mindestens 30mN/$\mu$m aufweisen. Die dort verwendeten Beschichtungsmittel enthalten silanmodifizierte Polyacrylatcopolymere, hyperverzweigte Polyester sowie Polyisocyanate und Aminoplastharze als Vernetzer. Beschichtungsmittel, die als Vernetzer mit Alkoxysilylaminen modifizierte Polyisocyanate enthalten, sind dort aber ebensowenig beschrieben wie Angaben zur Beeinflussung der Erichsentiefung der resultierenden Beschichtungen.

## Aufgabe

Aufgabe der vorliegenden Erfindung war es, Beschichtungsmittel, insbesondere für die Klarlackschicht bei Automobilserienlackierungen und Automobilreparaturlackierungen, zur Verfügung zu stellen, die zu Beschichtungen mit einer sehr guten Kratzfestigkeit, und zwar auch in der Langzeitkratzfestigkeit - d.h. nach wiederholter Kratzbelastung -, bei gleichzeitig guten Ergebnissen in der Prüfung der Erichsentiefung und bei gleichzeitig guten Steinschlagschutzeigenschaften führen. Insbesondere sollten die Beschichtungen eine so hohe Kratzfestigkeit aufweisen, dass der Restglanz (20° Messwinkel) nach dem sogenannten Crockmeter-Test mindestens 40%, bevorzugt mindestens 50 % beträgt, gleichzeitig aber auch gute Erichsentiefungswerte von mehr als 7,0 mm (Mittelwert aus mindestens 6 Messungen) und gute Steinschlagschutzeigenschaften erreicht werden. Außerdem sollten sich die Beschichtungen, speziell die Klarlackierungen, auch in Schichtdicken größer 40 $\mu$m herstellen lassen, ohne dass Spannungsrisse auftreten.

Darüberhinaus sollten die Beschichtungsmittel die üblicherweise an die Klarlackschicht bei Automobilserienlackierungen und Autoreparaturlackierungen gestellten Anforderungen erfüllen. Schließlich sollten die neuen Beschichtungsmittel einfach und sehr gut reproduzierbar herstellbar sein und während der Lackapplikation keine ökologischen Probleme bereiten.

## Lösung der Aufgabe

Im Lichte der oben genannten Aufgabenstellung wurden Beschichtungsmittel gefunden, enthaltend

(A) mindestens ein hydroxylgruppenhaltiges Polyacrylat und/oder mindestens ein hydroxylgruppenhaltiges Polymethacrylat und

(B) mindestens eine isocyanatgruppenhaltige Verbindung (B) mit mindestens einer Struktureinheit (I) der Formel (I)

$$-NR-(X-SiR''_x(OR')_{3-x}) \quad (I),$$

und mit mindestens einer Struktureinheit (II) der Formel (II)

$$-N(X-SiR''_x(OR')_{3-x})_n(X'-SiR''_y(OR')_{3-y})_m \qquad (II),$$

wobei

R = Wasserstoff, Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,

R' = Wasserstoff, Alkyl oder Cycloalkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R' = Ethyl und/oder Methyl,

X,X' = linearer und/oder verzweigter Alkylen oder Cycloalkylenrest mit 1 bis 20 Kohlenstoffatomen, bevorzugt X, X' = Alkylenrest mit 1 bis 4 Kohlenstoffatomen,

R'' = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R'' = Alkylrest, insbesondere mit 1 bis 6 C-Atomen,

n = 0 bis 2,

m 0 bis 2,

m+n = 2 , sowie

x,y = 0 bis 2

ist,

dadurch gekennzeich net, dass

(i) das hydroxylgruppenhaltige Polyacrylat-und/oder das hydroxylgruppenhaltige Polymethacrylat eine Glasübergangstemperatur von weniger als 10°C aufweist,
(ii) die isocyanatgruppenhaltige Verbindung (B) mehr als 10 mol-% bis 90 mol-%, bevorzugt 20 bis 80 mol-%, mindestens einer Struktureinheit der Formel (I) und 10 bis weniger als 90 mol-%, bevorzugt 20 bis 80 mol-%, mindestens einer Struktureinheit der Formel (II) aufweist, jeweils bezogen auf die Gesamtheit der Struktureinheiten (I) und (II), und
(iii) 10 bis 60 mol-% der Isocyanatgruppen des Di- und/oder Polyisocyanat-Grundkörpers der Verbindung (B) zu den Struktureinheiten der Formeln (I) und (II) umgesetzt worden sind.

Gegenstand der vorliegenden Erfindung sind außerdem mehrstufige Beschichtungsverfahren unter Verwendung dieser Beschichtungsmittel sowie die Verwendung der Beschichtungsmittel als Klarlack bzw. Anwendung des Beschichtungsverfahrens für die Automobilserienlackierung, die Lackierung von Automobil-Anbauteilen und die Automobilreparaturlackierung.

Im Hinblick auf den Stand der Technik war es überraschend und für den Fachmann nicht vorhersehbar, dass die Aufgaben, die der vorliegenden Erfindung zugrunde lagen, mit Hilfe der erfindungsgemäßen Beschichtungsmittel gelöst werden konnten.

So ist es insbesondere überraschend, dass die erfindungsgemäßen Beschichtungsmittel zu Beschichtungen mit einer sehr guten Kratzfestigkeit, und zwar auch in der Langzeitkratzfestigkeit, bei gleichzeitig guten Ergebnissen in der Prüfung der Erichsentiefung und bei gleichzeitig guten Steinschlagschutzeigenschaften führen. Insbesondere weisen die Beschichtungen eine so hohe Kratzfestigkeit auf, dass der Restglanz (20° Messwinkel) nach dem sogenannten Crockmeter-Test mindestens 40%, bevorzugt mindestens 50 % beträgt, gleichzeitig aber auch gute Erichsentiefungswerte von mehr als 7,0 mm (Mittelwert aus mindestens 6 Messungen) und gute Steinschlagschutzeigenschaften erreicht werden.

Gleichzeitig liefern die erfindungsgemäßen Beschichtungsmittel neue Beschichtungen und Lackierungen, speziell Klarlackierungen, die sich auch in Schichtdicken größer 40 μm herstellen lassen, ohne dass Spannungsrisse auftreten. Deswegen können die erfindungsgemäßen Beschichtungen und Lackierungen, insbesondere die Klarlackierungen, in dem technologisch und ästhetisch besonders anspruchsvollen Gebiet der Automobilserienlackierung (OEM) eingesetzt werden.

Schließlich können die erfindungsgemäßen Beschichtungsmittel besonders einfach und sehr gut reproduzierbar hergestellt werden und bereiten bei der Lackapplikation keine signifikanten toxikologischen und ökologischen Probleme.

## Beschreibung der Erfindung

### Die erfindungsgemäßen Beschichtungsmittel

### Die hydroxylgruppenhaltigen Verbindungen (A)

Es ist erfindungswesentlich, dass die Beschichtungsmittel als Komponente (A) mindestens ein hydroxylgruppenhaltiges Polyacrylat und/oder mindestens ein hydroxylgruppenhaltiges Polymethacrylat enthalten, welches eine Glasübergangstemperatur Tg von weniger als 10°C aufweist. Bevorzugt weist das als Komponente (A) eingesetzte hydroxylgruppenhaltige Polyacrylat und/oder das als Komponente (A) eingesetzte hydroxylgruppenhaltige Polymethacrylat eine Glasübergangstemperatur Tg von -60°C bis 5°C, besonders bevorzugt von -30°C bis < 0°C, auf.

Die Glasübergangstemperatur wird mit Hilfe von DSC-Messungen nach ISO 11357-2 bestimmt.

Die Glasübergangstemperatur kann vom Fachmann zunächst auch theoretisch mit Hilfe der nachfolgend aufgeführten Fox-Gleichung (III) abgeschätzt werden, ist aber dann wie oben beschrieben experimentell zu bestimmen:

$$1/T_g = \sum_{n=1}^{n=x} W_n/T_{gn} \qquad \text{(III)}$$

wobei

$T_g$ = Glasübergangstemperatur des Polyacrylates bzw. des Polymethacrylates,
x= Anzahl der verschiedenen einpolymerisierten Monomeren,
$W_n$ = Gewichtsanteil des n-ten Monomers
$T_{gn}$ = Glasübergangstemperatur des Homopolymers aus dem n-ten Monomer.

Es ist überraschend, dass durch den Einsatz von hydroxylgruppenhaltigen Polyacrylaten und/oder hydroxylgruppenhaltigen Polymethacrylaten, welche eine Glasübergangstemperatur Tg weniger als 10°C aufweisen, jeweils unter der Voraussetzung von gleichem Härteranteil (B) mit gleichem Silangehalt und gleichem Verhältnis der Struktureinheiten (I) und (II), die Kratzfestigkeit der resultierenden Beschichtungen im Vergleich zur Verwendung der entsprechenden Poly(meth)acrylate mit gleicher OH-Zahl, aber höherer Glasübergangstemperatur Tg > 10°C signifikant verbessert werden kann. Es ist ebenfalls überraschend, dass gleichzeitig die Erichsentiefungswerte signifikant verbessert werden können. Außerdem wird es entsprechend durch die Verwendung der Poly(meth)acrylatpolyole (A) mit einer Glasübergangstemperatur von weniger als 10°C - im Vergleich zu Beschichtungsmitteln auf der Basis von Poly(meth)acrylatpolyolen mit einer Glasübergangstemperatur oberhalb von 10°C - möglich, gleich gute Kratzfestigkeiten durch niedrigere Silangehalte zu erhalten, was auch unter ökonomischen Aspekten reizvoll ist, da die Aminosilankomponente den kostenintensivsten Baustein in derartigen Lacksystemen darstellt.

Die erfindungsgemäß als Komponente (A) eingesetzten Polyacrylatpolyole und/oder Polymethacrylatpolyole, im folgenden kurz Poly(meth)acrylatpolyole genannt, sind in der Regel Copolymerisate. Als Komponente (A) werden bevorzugt (Meth)Acrylatcopolymerisate eingesetzt, die erhältlich sind, indem

(a) 10 bis 80 Gew.- %, bevorzugt 20 bis 50 Gew.- %, eines hydroxylgruppenhaltigen Esters der Acrylsäure oder Mischungen dieser Monomeren,

(b) 0 bis 30 Gew.- %, bevorzugt 0 bis 15 Gew.- % eines von (a) verschiedenen hydroxylgruppenhaltigen Esters der Methacrylsäure oder eines Gemisches aus solchen Monomeren,

(c) 5 bis 90 Gew.- %, bevorzugt 20 bis 70 Gew.- %, eines von (a) und (b) verschiedenen aliphatischen oder cycloaliphatischen Esters der (Meth)acrylsäure mit mindestens 4 Kohlenstoffatomen im Alkoholrest oder eines Gemisches aus solchen Monomeren,

(d) 0 bis 5 Gew.- %, bevorzugt 0,5 bis 3,5 Gew.- %, einer ethylenisch ungesättigten Carbonsäure oder einer Mischung aus ethylenisch ungesättigten Carbonsäuren,

(e) 0 bis 50 Gew.- %, bevorzugt 0 bis 20 Gew.- %, eines Vinylaromaten oder eines Gemisches aus solchen Monomeren und

(f) 0 bis 50 Gew.- %, bevorzugt 0 bis 35 Gew.- %, eines von (a), (b), (c), (d) und (e) verschiedenen ethylenisch ungesättigten Monomeren oder eines Gemisches aus solchen Monomeren

copolymerisiert werden, wobei die Summe der Gewichtsanteile der Komponenten (a), (b), (c), (d), (e) und (f) stets 100 Gew.-% ergibt.

Als hydroxylgruppenhaltige Ester der Acrylsäure (a) werden bevorzugt 2-Hydroxyethylacrylat, 2- Hydroxypropylacrylat, 3-Hydroxypropylacrylat, 3-Hydroxybutylacrylat und 4-Hydroxybutylacrylat sowie Gemische aus solchen Monomeren eingesetzt.

Als hydroxylgruppenhaltige Ester der Methacrylsäure (b) werden bevorzugt 2-Hydroxyethylmethacrylat, 2- Hydroxypropylmethacrylat, 3-Hydroxypropylmethacrylat, 3-Hydroxybutylmethacrylat und 4-Hydroxybutylmethacrylat sowie Gemische aus solchen Monomeren eingesetzt.

Als weitere Monomerbausteine (c) werden für die Poly(meth)acrylatpolyole bevorzugt Alkylacrylate und/oder Alkylmethacrylate mit mindestens 4 C-Atomen im Alkylrest eingesetzt, wie vorzugsweise Butylacrylat, Butylmethacrylat, Isobutylacrylat, Isobutylmethacrylat, tert-Butylacrylat, tert-Butylmethacrylat, Amylacrylat, Amylmethacrylat, Hexylacrylat, Hexylmethacrylat, Ethylhexylacrylat, Ethylhexylmethacrylat, 3,3,5-Trimethylhexylacrylat, 3,3,5-Trimethylhexylmethacrylat, Stearylacrylat, Stearylmethacrylat, Laurylacrylat oder Laurylmethacrylat, Cycloalkylacrylate und/oder Cycloalkylmethacrylate, wie Cyclopentylacrylat, Cyclopentylmethacrylat, Isobornylacrylat, Isobornylmethacrylat, Cyclohexylacrylat und/oder Cyclohexylmethacrylat. Bevorzugt werden als Monomer (c) Butylacrylat, Butylmethacrylat, Hexylacrylat, Hexylmethacrylat,Ethylhexylacrylat und Ethylhexylmethacrylat eingesetzt.

Als Komponente (e) wird insbesondere Styrol und als Komponente (d) wird insbesondere Acrylsäure eingesetzt. Als Komponente (f) können insbesondere Alkylester und Hydroxyalkylester anderer ethylenisch ungesättigter Cärbonsäuren eingesetzt werden.

Die erfindungsgemäß eingesetzten Poly(meth)acrylatpolyole (A) weisen vorzugsweise massenmittlere Molekulargewichte Mw zwischen 1.000 und 20.000 Dalton, insbesondere zwischen 1.500 und 10.000 Dalton auf, jeweils gemessen mittels Gelpermeationschromatographie (GPC) gegen einen Polystyrolstandard.

Die Poly(meth)acrylatpolyole (A) weisen bevorzugt eine OH-Zahl von 60 bis 300 mg KOH/g, insbesondere zwischen 100 und 250 mgKOH/g, ganz besonders zwischen 150 und 200 mgKOH/g, auf. Die Hydroxylzahl (OH-Zahl) gibt an, wieviel mg Kaliumhydroxid der Essigsäure-Menge äquivalent sind, die von 1 g Substanz bei der Acetylierung gebunden wird. Die Probe wird bei der Bestimmung mit Essigsäureanhydrid-Pyridin gekocht und die entstehende Säure mit Kaliumhydroxidlösung titriert (DIN 53240-2).

Die Poly(meth)acrylatpolyole (A) weisen bevorzugt eine Säurezahl zwischen 0 und 30 mg KOH/g auf. Die Säurezahl gibt hierbei die Anzahl der mg Kalium-hydroxyid an, die zur Neutralisation von 1 g der jeweiligen Verbindung der Komponente (b) verbraucht wird (DIN EN ISO 2114).

**Die isocyanatgruppenhaltigen Verbindungen (B)**

Als Komponente (B) enthalten die erfindungsgemäßen Beschichtungsmittel eine oder mehrere Verbindungen mit freien, d.h. unblockierten, und/oder blockierten Isocyanatgruppen. Bevorzugt enthalten die erfindungsgemäßen Beschichtungsmittel Verbindungen (B) mit freien Isocyanatgruppen. Die freien Isocyanatgruppen der isocyanatgruppenhaltigen Verbindungen B können aber auch in blockierter Form eingesetzt werden. Dies ist bevorzugt dann der Fall, wenn die erfindungsgemäßen Beschichtungsmittel als einkomponentige Systeme eingesetzt werden.

Die als Grundkörper für die erfindungsgemäß bevorzugt eingesetzten isocyanatgruppenhaltigen Verbindungen (B) dienenden Di- und/oder Polyisocyanate sind an sich bekannte substituierte oder unsubstituierte aromatische, aliphatische, cycloaliphatische und/oder heterocyclische Polyisocyanate. Beispiele für bevorzugte Polyisocyanate sind: 2,4-Toluoldiisocyanat, 2,6-Toluoldiisocyanat, Diphenylmethan-4,4'-diisocyanat, Diphenylmethan-2,4'-diisocyanat, p-Phenylendiisocyanat, Biphenyldiisocyanate, 3,3'-Dimethyl-4,4'-diphenylendiisocyanat, Tetramethylen-1,4-diisocyanat, Hexamethylen-1,6-diisocyanat, 2,2,4-Trimethylhexane-1,6-diisocyanat, Isophorondiisocyanat, Ethylendiisocyanat, 1,12-Dodecandiisocyanat, Cyclobutan-1,3-diisocyanat, Cyclohexan-1,3-diisocyanat, Cyclohexan-1,4-diisocyanat, Methylcyclohexyldiiso-cyanate, Hexahydrotoluol-2,4-diisocyanat, Hexahydrotoluol-2,6-diisocyanat, Hexahydrophenylen-1,3-diisocyanat, Hexahydrophenylen-1,4-diisocyanat, Perhydrodiphenylmethan-2,4'-diisocyanat, 4,4'-Methylendicyclohexyldiisocyanat (z.B. Desmodur ® W der Fa. Bayer AG), Tetramethylxylyldiisocyanate (z.B. TMXDI ® der Fa. American Cyanamid) und Mischungen der vorgenannten Polyisocyanate. Weiterhin bevorzugte Polyisocyanate sind die Biuret-Dimere und die Isocyanurat-Trimere der vorgenannten Diisocyanate.

Besonders bevorzugte Diisocyanat-Grundkörper und Polyisocyanat-Grundkörper sind Diisocyanate und/oder Polyisocyanate mit einer Glasübergangstemperatur von kleiner gleich 0°C, bevorzugt einer Glasübergangstemperatur von -100°C bis -20°C. Die Glasübergangstemperatur wird dabei mittels DSC-Messungen nach ISO 11357-2 bestimmt. Ganz besonders bevorzugte Diisocynanat-Grundkörper und Polyisocyanant-Grundkörper sind Hexamethylen-1,6-diisocyanat und/oder deren Isocyanurat-Trimere und/oder deren Allophanat-Dimere.

In einer weiteren Ausführungsform der Erfindung sind die Polyisocyanate Polyisocyanat-Präpolymerisate mit Urethan-Struktureinheiten, welche durch Umsetzung von Polyolen mit einem stöchiometrischen Überschuß an vorgenannten Polyisocyanaten erhalten werden. Solche Polyisocyanat-Präpolymere sind beispielsweise in US-A-4,598,131 beschrieben.

Die als Komponente (B) eingesetzten isocyanatgruppenhaltigen Verbindungen weisen mindestens eine Struktureinheit (I) der Formel (I)

$$-NR-(X-SiR''_x(OR')_{3-x})\quad (I),$$

und mindestens eine Struktureinheit (II) der Formel (II)

$$-N(X-SiR''_x(OR')_{3-x})_n(X'-SiR''_y(OR')_{3-y})_m\quad (II)$$

auf, wobei

R = Wasserstoff, Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,
R' = Wasserstoff, Alkyl oder Cycloalkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R' = Ethyl und/oder Methyl,
X,X' = linearer und/oder verzweigter Alkylen oder Cycloalkylenrest mit 1 bis 20 Kohlenstoffatomen, bevorzugt X, X' = Alkylenrest mit 1 bis 4 Kohlenstoffatomen,
R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R" = Alkylrest, insbesondere mit 1 bis 6 C-Atomen,
n = 0 bis 2,
m = 0 bis 2,
m+n = 2 , sowie
x,y = 0 bis 2

ist.

Die jeweiligen bevorzugten Alkoxyreste (OR') können gleich oder verschieden sein, entscheidend für den Aufbau der Reste ist jedoch, inwiefern diese die Reaktivität der hydrolysierbaren Silangruppen beeinflussen. Bevorzugt ist R' ein Alkylrest, insbesondere mit 1 bis 6 C-Atomen. Besonders bevorzugt sind Reste R', die die Reaktivität der Silangruppen erhöhen, d.h. gute Abgangsgruppen darstellen. Insofern ist ein Methoxy- Rest gegenüber einem Ethoxy - Rest und dieser wiederum gegenüber einem Propoxyrest bevorzugt. Besonders bevorzugt ist daher R' = Ethyl und/oder Methyl, insbesondere Methyl.

Des Weiteren kann die Reaktivität von organofunktionellen Silanen auch durch die Länge der Spacer X, X' zwischen Silan - Funktionalität und organischer funktioneller Gruppe, die zur Reaktion mit dem modifizierenden Bestandteil dient, erheblich beeinflusst werden. Beispielhaft dafür seien die "alpha" - Silane genannt, die bei der Firma Wacker erhältlich sind, und bei denen eine Methylengruppe anstelle der bei "gamma"-Silane vorhandenen Propylengruppe zwischen Si-Atom und funktioneller Gruppe ist.

Die erfindungsgemäß eingesetzten, mit den Struktureinheiten (I) und (II) funktionalisierten isocyanatgruppenhaltigen Verbindungen (B) werden besonders bevorzugt durch Umsetzung der vorgenannten Di- und/oder Polyisocyanate mit mindestens einer Verbindung der Formel (Ia)

$$H-NR-(X-SiR''_x(OR')_{3-x})\quad (Ia),$$

und mit mindestens einer Verbindung der Formel (IIa)

$$HN(X-SiR''_x(OR')_{3-x})_n(X'-SiR''_y(OR')_{3-y})_m\quad (IIa),$$

erhalten, wobei die Substituenten die obengenannte Bedeutung haben.

Erfindungsgemäß bevorzugte Verbindungen (IIa) sind Bis(2-ethyltrimethoxysilyl)amin, Bis(3-propyltrimethoxysilyl)amin, Bis(4-butyltrimethoxysilyl)-amin, Bis(2-ethyltriethoxysilyl)amin, Bis(3-propyltriethoxysilyl)amin und/- oder Bis (4-butyltriethoxysilyl)amin. Ganz besonders bevorzugt ist Bis(3-propyltrimethoxysilyl)amin. Solche Aminosilane sind beispielsweise unter dem Markennamen DYNASYLAN ® der Fa. DEGUSSA bzw. Silquest ® der Fa. OSI verfügbar.

Erfindungsgemäß bevorzugte Verbindungen (Ia) sind Aminoalkyl-trialkoxysilane, wie vorzugsweise 2-Aminoethyltrimethoxysilan, 2-Aminoethyltriethoxysilan, 3-Aminopropyltrimethoxysilan, 3-Aminopropyltriethoxysilan, 4-Aminobutyltrimethoxysilan, 4-Aminobutyltriethoxysilan. Besonders bevorzugte Verbindungen (Ia) sind N-(2- (trimethoxysilyl)ethyl)alkylamine, N-(3-(trimethoxysilyl)propyl)alkylamine, N-(4-(trimethoxysilyl)butyl) alkylamine, N-(2-(triethoxysilyl) ethyl)alkylamine, N-(3-(triethoxysilyl)propyl)-alkylamine und/oder N-(4-(triethoxysilyl)butyl)alkylamine. Ganz besonders bevorzugt ist N-(3-(trimethoxysilyl) propyl)butylamin. Solche Aminosilane sind beispielsweise unter dem Markennamen DYNASYLAN ® der Fa. DEGUSSA bzw. Silquest ® der Fa. OSI verfügbar.

Ganz besonders bevorzugte isocyanatgruppenhaltige Verbindungen (B) sind Umsetzungsprodukte von Hexamethylen-1,6-diisocyanat und/oder deren Isocyanurat-Trimere und/oder deren Allophanat-Dimere mit Bis(3-propyltrimethoxysilyl)amin und N-(3-(trimethoxysilyl) propyl)butylamin.

Der Festkörpergehalt des erfindungsgemäß eingesetzten Polyisocyanat-härters (B) beträgt vorteilhaft mindestens 50 Gew.-%, bevorzugt mindestens 70 Gew.-%.

Es ist erfindungswesentlich, dass die isocyanatgruppenhaltige Verbindung (B) mehr als 10 mol-% bis 90 mol-%, bevorzugt 20 bis 80 mol-%, besonders bevorzugt 30 bis 70 mol-%, mindestens einer Struktureinheit (I) der Formel (I) und 10 bis weniger als 90 mol-%, bevorzugt 20 bis 80 mol-%, besonders bevorzugt 30 bis 70 mol-%, mindestens einer Struktureinheit (II) der Formel (II) aufweist, jeweils bezogen auf die Gesamtheit der Struktureinheiten (I) und (II).

Überraschenderweise wurde nun gefunden, dass insbesondere das Verhältnis der Struktureinheiten (I) der Formel (I) zu den Struktureinheiten (II) der Formel (II) einen ganz entscheidenden Einfluss auf die Ergebnisse der Erichsentiefung der resultierenden Beschichtung hat. Dabei nimmt im allgemeinen die Erichsentiefung der resultierenden Beschichtungen mit steigendem Anteil an Monosilan-Struktureinheiten (I) und mit sinkendem Anteil an Bissilan-Struktureinheiten (II) zu. Dieser Einfluss des Verhältnisses der Struktureinheiten (I)/(II) auf die Erichsentiefung ist dabei im allgemeinen umso größer, je höher der Anteil der Isocyanatgruppen des Polyisocyanat-Grundkörpers ist, die zu den Struktureinheiten (I) und (II) umgesetzt worden sind. Das heißt, dass dieser Einfluss des Verhältnisses der Struktureinheiten (I) zu den Struktureinheiten (II) auf die Erichsentiefung umso größer ist, je höher der Silanisierungsgrad ist, also je höher der Anteil der zu den Struktureinheiten (I) plus (II) umgesetzten Isocyanatgruppen, bezogen auf den Gesamtfestkörper des Beschichtungsmittels, ist. Diese Einflüsse gelten selbst verständlich nur, wenn die übrigen Parameter des Beschichtungsmittels, wie beispielsweise die Glasübergangstemperatur der Komponente (A) und die Mengenanteile der einzelnen Komponenten jeweils konstant sind.

Ganz besonders überraschend und außerdem höchst vorteilhaft ist dabei, dass sich gleichzeitig mit der Verbesserung der Erichsentiefung durch einen steigenden Anteil an Mono-Struktureinheiten (I) und einen sinkenden Anteil an Bissilan-Struktureinheiten (II) die Kratzfestigkeit der resultierenden Beschichtung sowie die Steinschlagschutzeigenschaften der resultierenden Beschichtungen nur sehr geringfügig verschlechtern, sofern allerdings der Silanisierungsgrad weder zu niedrig noch zu hoch ist, also der Anteil an zu den Struktureinheiten (I) plus (II) umgesetzten Isocyanatgruppen, bezogen auf den Gesamtfestkörper des Beschichtungsmittels, weder zu niedrig noch zu hoch ist.

Gleichzeitig nimmt dabei die Kratzfestigkeit der resultierenden Beschichtungen im allgemeinen mit steigendem Silanisierungsgrad zu, d.h. die Kratzfestigkeit ist um so höher, je höher der Anteil der zu den Struktureinheiten (I) und (II) umgesetzten Isocyanatgruppen, bezogen auf den Gesamtfestkörper des Beschichtungsmittels, ist. Überraschenderweise kann aber erfindungsgemäß durch die Verwendung der hydroxylgruppenhaltigen Poly(meth)acrylate mit einer Glasübergangstemperatur unter 10°C aber eben auch bei relativ niedrigen Anteilen an Struktureinheiten (I) und (II), also bei relativ niedrigen Silanisierungraden, eine hohe Kratzfestigkeit erreicht werden. Hierdurch gelingt es erfindungsgemäß, Beschichtungsmittel zur Verfügung zu stellen, die zu Beschichtungen mit einer hohen Kratzfestigkeit und gleichzeitig hohen Erichsentiefungs-Werten und einem guten Steinschlagschutz führen.

Es ist somit ebenfalls erfindungswesentlich, dass 10 bis 60 mol-%, bevorzugt 20 bis 40 mol-%, der Isocyanatgruppen des Polyisocyanat-Grundkörpers der Verbindung (B) zu den Struktureinheiten der Formel (I) und (II) umgesetzt worden sind. Dabei nimmt die Erichsentiefung der resultierenden Beschichtungen im allgemeinen mit abnehmendem Anteil an Isocyanatgruppen, die zu den Struktureinheiten (I) und (II) umgesetzt worden sind, zu, wenn das Verhältnis der Struktureinheiten (I) zu den Struktureinheiten (II) konstant bleibt und auch alle anderen Kenngrößen des Beschichtungsmittels, wie beispielsweise OH-Zahl und die Glasübergangstemperatur der Komponente (A), konstant bleiben. Außerdem werden auch hohe Werte der Erichsentiefung der resultierenden Beschichtungen erhalten, wenn der Anteil der zu den Struktureinheiten (I) und (II) umgesetzten Isocyanatgruppen relativ hoch ist, dafür aber der Anteil der Struktureinheiten (I) sehr hoch und der Anteil der Struktureinheiten (II) sehr niedrig ist und bevorzugt gleichzeitig die Glasübergangstemperatur der Komponente (A) möglichst niedrig ist.

Besonders bevorzugt sind erfindungsgemäß Beschichtungsmittel, die einen berechneten Silicium Gehalt von 1,5 Massen-% bis 6,0 Massen-% Si, bevorzugt einen berechneten Silicium Gehalt von 2,0 Massen-% bis 5,0 Massen-% Si, jeweils bezogen auf den Feststoffgehalt des Beschichtungsmittels, aufweisen. Dieser angegebene berechnete Siliciumgehalt entspricht dem in der thermogravimetrischen Analyse erwarteten Siliciumgehalt in Masse-% und wird aus den eingesetzten Rohstoffen dadurch berechnet, dass alle an das Silicium gebundenen organischen Reste abgezogen werden und die Sauerstoffatome am Silicium nur zur Hälfte berücksichtigt werden. Beispielsweise wird jede Si(OR)3-Gruppe mit $SiO_{1,5}$ bei der Berechnung des Siliciumanteils berücksichtigt. Dies trägt zu einer Vergleichbarkeit von Lackystemen bei, die mit unterschiedlichen Abgangsgruppen OR am Silicium ausgestattet sind. Insbesondere Methoxyreste und Ethoxyreste, verändern also nicht den berechneten Siliciumanteil. Dies berücksichtigt daher, dass diese Reste

OR im gehärteten Lackfilm zum größten Teil nicht mehr enthalten sind.

Bevorzugt enthält der erfindungsgemäß eingesetzte Polyisocyanathärter wenigstens einen Wasserfänger, beispielsweise reaktive Silane mit einer höheren Reaktivität gegenüber Wasser als Isocyanate. Vorteilhaft werden als Wasserfänger insbesondere Orthoameisensäuretrialkylester verwendet. Als Wasserfänger wird besonders bevorzugt Triethylorthoformiat verwendet. Vorzugsweise werden 0,01 Gew.-% bis 10 Gew.-%, bevorzugt 0,03 Gew.-% bis 5,0 Gew.%, mindestens eines Wasserfängers bezogen auf den Gesamtgehalt des Beschichtungsmittels an nichtflüchtigen Anteilen, zugesetzt.

Die Umsetzung der isocyanatgruppenhaltigen Verbindungen (B) mit den Verbindungen (Ia) und (IIa) erfolgt vorzugsweise in Inertgasatmosphäre bei Temperaturen von maximal 100 °C, bevorzugt von maximal 60 °C. Bevorzugt erfolgt die Umsetzung der isocyanatgruppenhaltigen Verbindungen (B) mit den Verbindungen (Ia) und (IIa) in einem Lösemittel oder in einem Lösemittelgemisch in Gegenwart wenigstens eines Wasserfängers und in Gegenwart wenigstens eines Amins, bevorzugt in Gegenwart mindestens eines tertiären Amins, wie beispielsweise 1,4-Diazabicyclo [2.2.2]octan (DABCO), Triethylamin und Diisopropylethylamin, insbesondere Triethylamin.

Bevorzugt werden während der Synthese mindestens 1 Gew.-%, bevorzugt mindestens 2 Gew.-%, besonders bevorzugt mindestens 3 Gew.-% und ganz besonders bevorzugt mindestens 4 Gew.-% mindestens eines Wasserfängers, bevorzugt Triethylorthoformiat, bezogen auf den Gesamtgehalt der Reaktionsmischung an nichtflüchtigen Anteilen, zugesetzt.

Bevorzugt wird das Amin während der Synthese in einer Menge von 2 bis 6 Gew.-%, bezogen auf Gesamtgehalt der Reaktionsmischung an nichtflüchtigen Anteilen, eingesetzt. Besonders bevorzugt wird Triethylamin während der Synthese in einer Menge von 1,5 bis 3,5 Gew.-%, bezogen auf den Gesamtgehalt der Reaktionsmischung an nichtflüchtigen Anteilen, eingesetzt.

Das Lösemittel bzw. Lösemittelgemisch, in dem die Polyisocyanathärter hergestellt werden, kann aus aromatischen Kohlenwasserstoffen wie 1,2,4-Trimethylbenzol, Mesitylen, Xylol, Propylbenzol und Isopropylbenzol bestehen. Ein Beispiel für ein geeignetes Lösemittelgemisch aus aromatischen Kohlenwasserstoffen ist Solventnaphtha. Das Lösemittel, in dem die Polyisocyanathärter hergestellt werden, kann auch aus aliphatischen Kohlenwasserstoffen, Ketonen, wie Aceton, Methylethylketon oder Methylamylketon, Estern, wie Ethylacetat, Butylacetat, Pentylacetat oder Ethylethoxypropionat, Ether oder Mischungen aus den vorgenannten Lösemitteln bestehen, wobei Lösemittelgemische mit einem hohen Anteil an Butylacetat, insbesondere mindestens 60 Gew.-% Butylacetat, bezogen auf das Gesamtgewicht des Lösemittelgemisches, bevorzugt sind. Besonders bevorzugt enthält das Lösemittelgemisch mindestens 80 Gew.-% Butylacetat, insbesondere mindestens 95 Gew.-% Butylacetat. Ganz besonders vorteilhaft wird in reinem Butylacetat gearbeitet.

Alternativ kann der Polyisocyanathärter auch bevorzugt dadurch hergestellt werden, dass in einem ersten Schritt im Mittel pro Molekül maximal eine der Isocyanatgruppen des Polyisocyanates, insbesondere eines Diisocyanates, mit den Verbindungen (Ia) und (IIa) umgesetzt wird und in einem zweiten Schritt das erhaltene Zwischenprodukt durch Dimerisierung, Trimerisierung, Urethan-, Biuret- oder Allophanatbildung zu einem Polyisocyanat umgesetzt wird.

Die freien Isocyanatgruppen des isocyanatgruppenhaltigen Verbindungen (B) können auch in blockierter Form eingesetzt werden. Dies ist bevorzugt dann der Fall, wenn die erfindungsgemäßen Beschichtungsmittel als einkomponentige Systeme eingesetzt werden. Zur Blockierung kann im Prinzip jedes für die Blockierung von Polyisocyanaten einsetzbare Blockierungsmittel mit einer ausreichend tiefen Deblockierungstemperatur eingesetzt werden. Derartige Blockierungsmittel sind dem Fachmann gut geläufig. Bevorzugt werden Blockierungsmittel, wie sie in EP-A-0 626 888 und EP-A-0 692 007 beschrieben sind, eingesetzt.

**Die Kombination der Komponenten (A) und (B) sowie weitere Komponenten des Beschichtungsmittels**

Die Gewichtsanteile des Polyols (A) und des Polyisocyanats (B) werden vorzugsweise solchermaßen gewählt, dass das molare Äquivalentverhältnis der nicht umgesetzten Isocyanatgruppen der isocyanathaltigen Verbindungen (B) zu den Hydroxylgruppen der hydroxylgruppenhaltigen Verbindungen (A) zwischen 0,9:1 und 1:1,1, bevorzugt zwischen 0,95:1 und 1,05:1, besonders bevorzugt zwischen 0,98:1 und 1,02:1, liegt.

Bevorzugt werden erfindungsgemäß Beschichtungsmittel eingesetzt, die von 20 bis 80 Gew.-%, bevorzugt von 30 bis 70 Gew.-%, jeweils bezogen auf den Feststoffgehalt des Beschichtungsmittel, mindestens eines hydroxylgruppenhaltigen Polyacrylates (A) und/oder mindestens eines hydroxylgruppenhaltigen Polymethacrylates (A) enthalten.

Bevorzugt werden erfindungsgemäß Beschichtungsmittel eingesetzt, die von 20 bis 80 Gew.-%, bevorzugt von 30 bis 70 Gew.-%, jeweils bezogen auf den Feststoffgehalt des Beschichtungsmittel, mindestens einer isocyanatgruppenhaltigen Verbindung (B) enthalten.

Handelt es sich um einkomponentige Beschichtungsmittel, so werden die isocyanatgruppenhaltigen Verbindungen (B) gewählt, deren freie Isocyanatgruppen mit den oben beschriebenen Blockierungsmitteln blockiert sind.

Bei den erfindungsgemäß bevorzugten 2-komponentigen (2K) Beschichtungsmitteln wird kurz vor der Applikation des Beschichtungsmittel eine Lackkomponente, enthaltend die hydroxylgruppenhaltige Verbindung (A) sowie

weitere nachfolgend beschriebene Komponenten, mit einer weiteren Lackkomponente, enthaltend die isocyanatgruppenhaltige Verbindung (B) und gegebenenfalls weitere der nachfolgend beschriebenen Komponenten in an sich bekannter Weise vermischt, wobei in der Regel die Lackkomponente, die die Verbindung (A) enthält, den Katalysator sowie einen Teil des Lösemittels enthält.

Die erfindungsgemäßen Beschichtungsmittel können ggf. außer der hydroxylgruppenhaltigen Komponente (A) noch ein oder mehrere, von der Komponente (A) verschiedene hydroxylgruppenhaltige Verbindungen (C) enthalten. Bevorzugt nehmen diese Bindemittel (C) einen Anteil von 10 bis 50 Gew.-% besonders bevorzugt von 20 bis 40 Gew.-%, bezogen auf den nicht flüchtigen Anteil der Polyolkomponente (A) + (C), ein.

Als hydroxylgruppenhaltige Verbindung (C) werden sowohl niedermolekulare Polyole als auch oligo- und/oder polymere Polyole eingesetzt.

Als niedermolekulare Polyole werden beispielsweise Diole, wie bevorzugt Ethylenglykol, Neopentylglykol, 1,2,-Propandiol, 2,2,-Dimethyl-1,3-Propandiol,1,4-Butandiol, 1,3-Butandiol, 1,5,-Pentandiol, 2,2,4-Trimethyl-1,3-pentandiol, 1,6-Hexandiol, 1,4-Cyclohexandimethanol und 1,2-Cyclohexandimethanol, sowie Polyole, wie bevorzugt Trimethylolethan, Trimethylolpropan, Trimethylolhexan, 1,2,4-Butantriol, Pentaerytritol sowie Dipentaerytritol, eingesetzt.

Bevorzugt werden solche niedermolekularen Polyole in untergeordneten Anteilen der Polyolkomponente (A) beigemischt.

Als oligo- und/oder polymere Polyole (C) werden beispielsweise Polyesterpolyole, Polyurethanpolyole, Polysiloxanpolyole und bevorzugt von der Komponente (A) verschiedene Polyacrylatpolyole und/oder Polymethacrylatpolyole eingesetzt, wobei als Komponente (C) ganz besonders bevorzugt Polyacrylatpolyole und/oder Polymethacrylatpolyole eingesetzt werden, die eine Glasübergangstemperatur von mindestens 10°C, insbesondere von 20 bis 80°C, aufweisen. Auch hier wird die Glasübergangstemperatur analog zur Bestimmung der Glasübergangstemperatur der Komponente (A) experimentell bestimmt.

**Katalysator (D)**

Die erfindungsgemäßen Beschichtungsmittel enthalten bevorzugt mindestens einen Katalysator (D) für die Vernetzung der Silangruppen. Beispiele sind Metallkomplexe mit Chelatliganden auf der Basis von Zink oder Aluminium, wie die z.B. in der WO05/03340 beschriebenen Titanate oder Lewis-Säuren, wobei aber bei der Auswahl der Katalysatoren darauf zu achten ist, dass die Katalysatoren nicht zu einer Vergilbung der Beschichtungsmittel führen. Außerdem sind einige bekanntermaßen eingesetzte Katalysatoren aus toxikologischen Gründen weniger erwünscht.

Es ist daher bevorzugt, dass als Katalysator (D) phosphorhaltige, insbesondere phosphorhaltige und stickstoffhaltige Katalysatoren eingesetzt werden. Dabei können auch Mischungen aus zwei oder mehreren verschiedenen Katalysatoren (D) eingesetzt werden.

Beispiele für geeignete phosphorhaltige Katalysatoren (D) sind substituierte Phosphonsäurediester und Diphosphonsäurediester, vorzugsweise aus der Gruppe, bestehend aus acyclischen Phosphonsäurediestern, cyclischen Phosphonsäurediestern, acyclischen Diphosphonsäurediestern und cyclischen Diphosphonsäurediestern. Derartige Katalysatoren sind beispielsweise in der deutschen Patentanmeldung DE-A-102005045228 beschrieben.

Insbesondere werden aber substituierte Phosphorsäuremonoester und Phosphorsäurediester, vorzugsweise aus der Gruppe, bestehend aus acyclischen Phosphorsäurediestern und cyclischen Phosphorsäurediestern, besonders bevorzugt Aminaddukte der Phosphorsäure-mono- und -di-ester, eingesetzt. Dabei werden die acyclischen Phosphorsäurediester (D) insbesondere aus der Gruppe, bestehend aus acyclischen Phosphorsäurediestern (D) der allgemeinen Formel (IV):

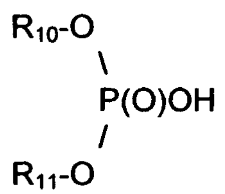

(IV);

ausgewählt, wobei die Reste $R_{10}$ und $R_{11}$ aus der Gruppe, bestehend aus:

- substituiertem und unsubstituiertem Alkyl- mit 1 bis 20, vorzugsweise 2 bis 16 und insbesondere 2 bis 10 Kohlenstoffatomen, Cycloalkylmit 3 bis 20, vorzugsweise 3 bis 16 und insbesondere 3 bis 10 Kohlenstoffatomen und Arylmit 5 bis 20, vorzugsweise 6 bis 14 und insbesondere 6 bis 10 Kohlenstoffatomen,

- substituiertem und unsubstituiertem Alkylaryl-, Arylalkyl-, Alkylcycloalkyl-, Cycloalkylalkyl-, Arylcycloalkyl-, Cycloalkylaryl-, Alkylcycloalkylaryl-, Alkylarylcycloalkyl-, Arylcycloalkylalkyl-, Arylalkylcycloalkyl-, Cycloalkylalkylaryl-und

Cycloalkylarylalkyl-, wobei die hierin enthalten Alkyl-, Cycloalkyl- und Arylgruppen jeweils die vorstehend aufgeführte Anzahl von Kohlenstoffatomen enthalten und

- substituiertem und unsubstituiertem Rest- der vorstehend aufgeführten Art, enthaltend mindestens ein, insbesondere ein, Heteroatom, ausgewählt aus der Gruppe bestehend aus Sauerstoffatom, Schwefelatom, Stickstoffatom, Phosphoratom und Siliziumatom, insbesondere Sauerstoffatom, Schwefelatom und Stickstoffatom

ausgewählt werden und zusätzlich auch Wasserstoff darstellen können (Teilveresterung).

Ganz besonders bevorzugt werden als Katalysator (D) die entsprechenden aminblockierten Phosphorsäureester, und hier insbesondere aminblockierte Phosphorsäureethylhexylester und aminblockierte Phosphorsäurephenylester, ganz besonders bevorzugt aminblockierte Phosphorsäure-bis(2-ethylhexyl)ester eingesetzt.

Als Beispiele für Amine, mit welchem die Phosphorsäureester blockiert werden, sind insbesondere tertiäre Amine, beispielsweise bicyclische Amine, wie z. B. Diazabicyclootan (DABCO), Diazabicyclononen (DBN), Diazabicycloundecen (DBU), Dimethyldodecylamin oder Triethylamin, zu nennen. Besonders bevorzugt werden zur Blockierung der Phosphorsäureester tertiäre Amine eingesetzt, die eine gute Wirksamkeit des Katalysators bei den Härtungsbedingungen von 140 °C gewährleisten.

Bestimmte, mit Amin blockierte Phosphorsäurekatalysatoren sind auch kommerziell erhältlich (z.B. Nacure-Typen der Fa. King Industries). Beispielsweise sei der unter der Bezeichnung Nacure 4167 von der Firma King Industries als besonders geeigneter Katalysator auf der Basis eines aminblockierten Phosphorsäureteilesters genannt.

Die Katalysatoren werden vorzugsweise in Anteilen von 0,01 bis 20 Gew.-%, besonders bevorzugt in Anteilen von 0,1 bis 10 Gew.-%, bezogen auf die nicht flüchtigen Bestandteile des erfindungsgemäßen Beschichtungsmittels, eingesetzt. Eine geringere Wirksamkeit des Katalysators kann dabei durch entsprechend höhere Einsatzmengen teilweise kompensiert werden.

Die erfindungsgemäßen Beschichtungsmittel können noch einen weiteren Amin-Katalysator auf Basis eines bicyclischen Amins, insbesondere eines ungesättigten bicyclischen Amins, enthalten. Beispiele für geeignete Amin-Katalysatoren sind 1,5-Diazabicyclo[4.3.0]non-5-en oder 1,8-Diazabicyclo[5.4.0]undec-7-en.

Diese Amin-Katalysatoren werden vorzugsweise in Anteilen von 0,01 bis 20 Gew.-%, besonders bevorzugt in Anteilen von 0,1 bis 10 Gew.-%, bezogen auf die nicht flüchtigen Bestandteile des erfindungsgemäßen Beschichtungsmittels, eingesetzt.

Als Lösemittel für die erfindungsgemäßen Beschichtungsmittel sind insbesondere solche geeignet, die im Beschichtungsmittel chemisch inert gegenüber den Verbindungen (A), (B) und ggf. (C) sind und die auch bei der Härtung des Beschichtungsmittels nicht mit (A) und (B) reagieren. Beispiele für solche Lösemittel sind aliphatische und/oder aromatische Kohlenwasserstoffe wie Toluol, Xylol, Solventnaphtha, Solvesso 100 oder Hydrosol ® (Fa. ARAL), Ketone, wie Aceton, Methylethylketon oder Methylamylketon, Ester, wie Ethylacetat, Butylacetat, Pentylacetat oder Ethylethoxypropionat, Ether oder Mischungen aus den vorgenannten Lösemitteln. Bevorzugt weisen die aprotischen Lösemittel oder Lösemittelgemische einen Wassergehalt von maximal 1 Gew.-%, besonders bevorzugt maximal 0,5 Gew.-%, bezogen auf das Lösemittel, auf.

Neben den Verbindungen (A), (B) und ggf. (C) können noch weitere Bindemittel (E) eingesetzt werden, welche vorzugsweise mit den Hydroxylgruppen des Poly(meth)acrylats (A) und/oder mit den freien Isocyanatgruppen der Verbindung (B) und/oder mit den Alkoxysilylgruppen der Verbindungen (B) und/oder (C) reagieren und Netzwerkpunkte ausbilden können.

Beispielsweise sind als Komponente (E) Aminoplastharze und/oder Epoxydharze verwendbar. Es kommen die üblichen und bekannten Aminoplastharze in Betracht, deren Methylol- und/oder Methoxymethylgruppen teilweise mittels Carbamat- oder Allophanatgruppen defunktionalisiert sein können. Vernetzungsmittel dieser Art werden in den Patentschriften US-A-4 710 542 und EP-B-0 245 700 sowie in dem Artikel von B. Singh und Mitarbeiter "Carbamylmethylated Melamines, Novel Crosslinkers for the Coatings Industry" in Advanced Organic Coatings Science and Technology Series, 1991, Band 13, Seiten 193 bis 207, beschrieben.

In der Regel werden solche Komponenten (E) in Anteilen von bis zu 40 Gew.-%, bevorzugt von bis zu 30 Gew.-%, besonders bevorzugt von bis zu 25 Gew.-%, bezogen auf die nichtflüchtigen Bestandteile des Beschichtungsmittels, eingesetzt.

Darüber hinaus kann die erfindungsgemäße Bindemittelmischung bzw. das erfindungsgemäße Beschichtungsmittel mindestens ein übliches und bekanntes Lackadditiv (F) in wirksamen Mengen, d.h. in Mengen vorzugsweise bis zu 30 Gew.-%, besonders bevorzugt bis zu 25 Gew.-% und insbesondere bis zu 20 Gew.-%, jeweils bezogen auf die nichtflüchtigen Bestandteile des Beschichtungsmittels, enthalten.

Beispiele geeigneter Lackadditive (F) sind:

- insbesondere UV-Absorber;
- insbesondere Lichtschutzmittel wie HALS-Verbindungen, Benztriazole oder Oxalanilide;

- Radikalfänger;
- Slipadditive;
- Polymerisationsinhibitoren;
- Entschäumer;
- Reaktivverdünner, wie sie aus dem Stand der Technik allgemein bekannt sind, welche bevorzugt inert gegenüber den -Si(OR)3-Gruppen sind.
- Netzmittel wie Siloxane, fluorhaltige Verbindungen, Carbonsäurehalbester, Phosphorsäureester, Polyacrylsäuren und deren Copolymere oder Polyurethane;
- Haftvermittler wie Tricyclodecandimethanol;
- Verlaufmittel;
- filmbildende Hilfsmittel wie Cellulose-Derivate;
- Füllstoffe wie beispielsweise Nanopartikel auf der Basis von Siliziumdioxid, Aluminiumoxid oder Zirkoniumoxid; ergänzend wird noch auf das Römpp Lexikon »Lacke und Druckfarben« Georg Thieme Verlag, Stuttgart, 1998, Seiten 250 bis 252, verwiesen;
- rheologiesteuernde Additive, wie die aus den Patentschriften WO 94/22968, EP-A-0 276 501, EP-A-0 249 201 oder WO 97/12945 bekannten Additive; vernetzte polymere Mikroteilchen, wie sie beispielsweise in der EP-A-0 008 127 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile®; oder synthetische Polymere mit ionischen und/oder assoziativ wirkenden Gruppen wie Polyvinylalkohol, Poly(meth)acrylamid, Poly (meth)acrylsäure, Polyvinylpyrrolidon, Styrol-Maleinsäureanhydrid- oder Ethylen-Maleinsäure-anhydrid-Copolymere und ihre Derivate oder hydrophob modifizierte ethoxylierte Urethane oder Polyacrylate;
- Flammschutzmittel und /oder
- die bereits oben aufgeführten Wasserfänger:

In einer weiteren Ausführungsform der Erfindung kann die erfindungsgemäße Bindemittelmischung bzw. das erfindungsgemäße Beschichtungsmittel noch weitere Pigmente und/oder Füllstoffe enthalten und zur Herstellung pigmentierter Topcoats dienen. Die dafür eingesetzten Pigmente und/oder Füllstoffe sind dem Fachmann bekannt.

Da die aus den erfindungsgemäßen Beschichtungsmitteln hergestellten erfindungsgemäßen Beschichtungen auch auf bereits ausgehärteten Elektrotauchlackierungen, Füllerlackierungen, Basislackierungen oder üblichen und bekannten Klarlackierungen hervorragend haften, eignen sie sich neben dem Einsatz in der Automobilserien(OEM) lackierung ausgezeichnet für die Autoreparaturlackierung oder die modulare Kratzfestausrüstung von bereits lackierten Automobilkarosserien.

Die Applikation der erfindungsgemäßen Beschichtungsmittel kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen.

Die Aushärtung der applizierten erfindungsgemäßen Beschichtungsmittel kann nach einer gewissen Ruhezeit erfolgen. Die Ruhezeit dient beispielsweise zum Verlauf und zur Entgasung der Lackschichten oder zum Verdunsten von flüchtigen Bestandteilen wie Lösemittel. Die Ruhezeit kann durch die Anwendung erhöhter Temperaturen und/oder durch eine reduzierte Luftfeuchte unterstützt und/oder verkürzt werden, sofern hierbei keine Schädigungen oder Veränderungen der Lackschichten eintreten, etwa eine vorzeitige vollständige Vernetzung.

Die thermische Härtung der Beschichtungsmittel weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung auch stufenweise erfolgen. Eine weitere bevorzugte Härtungsmethode ist die Härtung mit nahem Infrarot (NIR-Strahlung).

Vorteilhafterweise erfolgt die thermische Härtung bei einer Temperatur von 30 bis 200°C, besonders bevorzugt 40 bis 190°C und insbesondere 50 bis 180°C während einer Zeit von 1 min bis zu 10 h, besonders bevorzugt 2 min bis zu 5 h und insbesondere 3 min bis 3 h, wobei bei den für die Automobilreparaturlackierung und für die Lackierung von Kunststoffteilen angewandten Temperaturen, die bevorzugt zwischen 30 und 90°C liegen, auch längere Härtzeiten zur Anwendung kommen können.

Die erfindungsgemäßen Beschichtungsmittel liefern neue gehärtete Beschichtungen, insbesondere Lackierungen, speziell Klarlackierungen, Formteile, speziell optische Formteile, und freitragende Folien, die hoch kratzfest sind, wobei die hohe Kratzfestigkeit auch nach einer Langzeitbelastung bestehen bleibt. Gleichzeitig zeichnen sich die erfindungsgemäß erhaltenen Beschichtungen durch gute Ergebnisse bei der Prüfung der Erichsentiefung und gute Steinschlagschutzeigenschaften aus. Außerdem weisen die erfindungsgemäß erhaltenen Beschichtungen auch einen sehr guten optischen Gesamteindruck auf. Schließlich lassen sich die erfindungsgemäßen Beschichtungen und Lackierungen, speziell die Klarlackierungen, auch in Schichtdicken > 40 μm herstellen, ohne dass Spannungsrisse auftreten.

Die erfindungsgemäßen Beschichtungsmittel eignen sich daher hervorragend als dekorative, schützende und/oder effektgebende, hoch kratzfeste Beschichtungen und Lackierungen von Karosserien von Fortbewegungsmitteln (insbesondere Kraftfahrzeuge, wie Motorräder, Busse, LKW oder PKW) oder von Teilen hiervon; von Bauwerken im Innen- und Außenbereich; von Möbeln, Fenstern und Türen; von Kunststoffformteiten, insbesondere CDs und Fenster; von industriellen Kleinteilen, von Coils, Containern und Emballagen; von weißer Ware; von Folien; von optischen, elektrotechnischen und mechanische Bauteilen sowie von Glashohlkörpern und Gegenständen des täglichen Bedarfs.

Insbesondere werden die erfindungsgemäßen Beschichtungsmittel und Lackierungen, insbesondere die Klarlackierungen, in dem technologisch und ästhetisch besonders anspruchsvollen Gebiet der Automobilserienlackierung (OEM) und zur Beschichtung von Kunststoff-Anbauteilen für Pkw-Karosserien, insbesondere für Karosserien von Pkw der Oberklasse, wie z. B. für die Herstellung von Dächern, Heckklappen, Motorhauben, Kotflügeln, Stoßstangen, Spoilern, Schwellern, Schutzleisten, seitlichen Verkleidungen u.ä., sowie der Automobilreparaturlackierung eingesetzt.

Die Kunststoffteile bestehen üblicherweise aus ASA, Polycarbonaten, Blends aus ASA und Polycarbonaten, Polypropylen, Polymethylmethacrylaten oder schlagzäh modifizierte Polymethylmethacrylaten, insbesondere aus Blends aus ASA und Polycarbonaten, bevorzugt mit einem Polycarbonatanteil > 40%, insbesondere > 50%, verwendet.

Unter ASA werden dabei im Allgemeinen schlagzähmodifizierte Styrol/-Acrylnitril-Polymerisate verstanden, bei denen Pfropfcopolymerisate von vinylaromatischen Verbindungen, insbesondere Styrol, und von Vinylcyaniden, insbesondere Acrylnitril, auf Polyalkylacrylatkautschuken in einer Copolymermatrix aus insbesondere Styrol und Acrylnitril, vorliegen.

Besonders bevorzugt werden die erfindungsgemäßen Beschichtungsmittel in mehrstufigen Beschichtungsverfahren eingesetzt, insbesondere bei Verfahren, bei dem auf ein gegebenenfalls vorbeschichtetes Substrat zunächst eine pigmentierte Basislackschicht und danach eine Schicht mit den erfindungsgemäßen Beschichtungsmittel aufgetragen werden. Gegenstand der Erfindung sind daher auch effekt- und/oder farbgebende Mehrschichtlackierungen aus mindestens einer pigmentierten Basislackschicht und mindestens einer darauf angeordneten Klarlackschicht, die dadurch gekennzeichnet sind, dass die Klarlackschicht aus dem erfindungsgemäßen Beschichtungsmittel hergestellt worden ist.

Es können sowohl wasserverdünnbare Basislacke als auch Basislacke auf Basis von organischen Lösemitteln eingesetzt werden. Geeignete Basis-lacke sind beispielsweise in der EP-A-0 692 007 und in den dort in Spalte 3, Zeilen 50ff., angeführten Dokumenten beschrieben. Bevorzugt wird der aufgebrachte Basislack zunächst getrocknet, das heißt dem Basislackfilm wird in einer Abdunstphase wenigstens ein Teil des organischen Lösemittels beziehungsweise des Wassers entzogen. Die Trocknung erfolgt vorzugsweise bei Temperaturen von Raumtemperatur bis 80°C. Nach der Trocknung wird das erfindungsgemäße Beschichtungsmittel aufgebracht. Anschließend wird die Zweischichtlackierung bevorzugt unter bei der Automobilserienlackierung angewandten Bedingungen bei Temperaturen von 30 bis 200°C, besonders bevorzugt 40 bis 190°C und insbesondere 50 bis 180°C, während einer Zeit von 1 min bis zu 10 h, besonders bevorzugt 2 min bis zu 5 h und insbesondere 3 min bis 3 h, eingebrannt, wobei bei den für die Automobilreparaturlackierung angewandten Temperaturen, die bevorzugt zwischen 30 und 90°C liegen, auch längere Härtzeiten zur Anwendung kommen können.

Die mit dem erfindungsgemäßen Beschichtungsmittel erzeugten Schichten zeichnen sich vor allem durch eine besonders hohe Kratzfestigkeit - auch nach Langzeitbelastung - aus und zeigen gleichzeitig gute Ergebnisse bei der Prüfung der Erichsentiefung sowie gute Steinschlagschutzeigenschaften. Schließlich weisen sie auch einen sehr guten optischen Gesamteindruck auf.

In einer weiteren bevorzugten Ausführungsform der Erfindung wird das erfindungsgemäße Beschichtungsmittel als transparenter Klarlack zur Beschichtung von Kunststoffsubstraten, insbesondere von Kunststoff-Anbauteilen, eingesetzt. Die Kunststoffanbauteile werden bevorzugt ebenfalls in einem mehrstufigen Beschichtungsverfahren beschichtet, bei dem auf ein gegebenenfalls vorbeschichtetes oder ein zur besseren Haftung der nachfolgenden Beschichtungen vorbehandeltes Substrat (z.B. Beflammen, Corona- oder Plasma-Behandlung des Substrats) zunächst eine pigmentierte Basislackschicht und danach eine Schicht mit den erfindungsgemäßen Beschichtungsmittel aufgetragen werden.

Schließlich wird das erfindungsgemäße Beschichtungsmittel als transparenter Klarlack zur Beschichtung von transparenten Kunststoffsubstraten eingesetzt. In diesem Fall beinhalten die Beschichtungsmittel UV-Absorber, die in Menge und Art auch auf den wirksamen UV-Schutz des Kunststoffsubstrats ausgelegt sind. Auch hier zeichnen sich die erhaltenen Beschichtungen durch eine herausragende Kombination von Kratzfestigkeit - auch bei Langzeitbeanspruchung - bei gleichzeitig sehr guten Eigenschaften bei der Prüfung der Erichsentiefung aus. Die solchermaßen beschichteten transparenten Kunststoffsubstrate werden vorzugsweise für den Ersatz von Glaskomponenten im Automobilbau eingesetzt, wobei die Kunststoffsubstrate bevorzugt aus Polymethylmethacrylat oder Poly-carbonat bestehen.

## Beispiele

### Herstellung der Poly(meth)acrylatpolyole A1 bis A4

In einem, mittels Ölumlaufthermostat beheizbaren, doppelwandigen 4-l Edelstahlkessel, ausgestattet mit Thermometer, Ankerrührer, 2 Tropftrichtern und Rückflußkühler wird Lösungsmittel zur Polymerisation vorgelegt. In einem der Tropftrichter wird die Monomerenmischung, in dem zweiten Tropftrichter die Intiatorlösung, enthaltend einen geeigneten Initiator (i.d.R. ein Peroxid), vorgelegt. Die Vorlage wird auf eine Polymerisationstemperatur von 140°C aufgeheizt. Nach Erreichen der Polymerisationstemperatur wird zunächst der Initiatorzulauf gestartet. 15 Minuten nach Beginn des Initiatorzulaufes wird der Monomerenzulauf (Dauer 240 Minuten) gestartet. Der Initiatorzulauf wird so eingestellt, daß er nach Beendigung des Monomerenzulaufes noch weitere 30 Minuten nachläuft. Nach Beendigung des Initiatorzulaufes wird die Mischung für weitere 2h bei 140°C gerührt und anschließend auf Raumtemperatur abgekühlt. Anschließend wird die Reaktionsmischung mit Lösemittel auf den in Tabelle 2 angegebenen Feststoffgehalt eingestellt.

Tabelle 1: Monomerzusammensetzung der Bindemittel (A1) bis (A4) in Gewichtsteilen

| | Beispiel 1 (A1) | Vgl.-beisp. V1 (A2) | Beispiel 2 (A3) | Vgl.-beisp. V2 (A4) |
|---|---|---|---|---|
| Komponente | Gew.-Tl. | Gew.-Tl. | Gew.-Tl. | Gew.-Tl. |
| Styrol | | 4,6 | 8,3 | 8,3 |
| 3-Hydroxypropylmethacrylat | | 13,0 | | 21,7 |
| n-Butylmethacrylat | | 8,7 | 8,9 | 3,1 |
| Acrylsäure | 1,7 | | 0,6 | 0,6 |
| Cyclohexylmethacrylat | | | | 16,8 |
| 4-Hydroxybutylacrylat | 7,4 | 3,5 | 12,8 | 6,2 |
| Ethylhexylacrylat | 5,0 | | | |
| t-Butylacrylat | 24,8 | 25,1 | | |
| 3-Hydroxypropylacrylat | 9,3 | | | |
| Ethylhexylmethacrylat | | | | 16,8 |
| i-Butylmethacrylat | | 2,9 | | |
| 2-Hydroxyethylacrylat | | | 12,8 | |
| n-Butylacrylat | 13,8 | | 20,4 | |

Tabelle 2: Kennzahlen der Bindemittel (A1) bis (A4)

| | Beispiel 1 | Vgl.-beisp. V1 | Beispiel 2 | Vglbeisp. V2 |
|---|---|---|---|---|
| Bindemittel | (A1) | (A2) | (A3) | (A4) |
| Festkörper 1h 150°C | 65% | 60% | 65% | 65% |
| Säurez. 1) berechnet [mgKOH/g] | 20-25 | 5-10 | 8-12 | 5-10 |
| OH-Zahl 2) berechnet [mgKOH/g] | 110 | 110 | 175 | 175 |
| Tg (FOX) 3) °C | -6 | 53 | -27 | 29 |
| 1) experimentell bestimmte Säurezahl<br>2) berechnete OH-Zahl ausgehend von der Menge an hydroxylgruppenhaltigen Monomeren<br>3) anhand der Foxgleichung berechnete Glasübergangstemperatur | | | | |

### Herstellung eines Härters (B1) mit einem Umsetzungsgrad der Isocyanatgruppen von c=30mol% und einem Anteil von 10 mol% Monosilan-Struktureinheiten (I) und 90 mol% Bissilan-Struktureinheiten (II)

In einem Dreihalsglaskolben, ausgestattet mit einem Rückflußkühler und einem Thermometer, werden 51,4

Teile trimerisiertes Hexamethylendiisocyanat (HDI) (Desmodur N3600, Firma Bayer Material Science), 2,4 Teile Triethylorthoformiat und 17,8 Teile Butylacetat vorgelegt. Unter Stickstoffüberschleierung und rühren wird eine Mischung aus 26,4 Teile Bis-[3-(trimethoxysilyl)propyl]amin (Dynasylan 1124, Firma Degussa, Rheinfelden) und 2,0 Teile N-[-3-(trimethoxysilyl)-propyl]-butylamin (Dynasylan 1189, Firma Degussa, Rheinfelden) so zudosiert, das 50°C nicht überschritten werden. Nach Ende der Dosierung wird die Reaktionstemperatur für 60 Minuten bei 50°C gehalten. Der Blockierungsgrad wird mittels Titration überprüft (ωNCO=8,1%). Der Härter weist einen nichtflüchtigen Anteil von 80 Gew.-% auf.

Herstellung eines Härters (B2) mit einem Umsetzungsgrad der Isocyanatgruppen von c=30mol% und 40 mol% Monosilan-Struktureinheiten (I) und 60 mol% Bissilan-Struktureinheiten (II)

In einem Dreihalsglaskolben, ausgestattet mit einem Rückflußkühler und einem Thermometer, werden 53,4 Teile trimerisiertes Hexamethylendiisocyanat (HDI) (Desmodur N3600, Firma Bayer Material Science), 2,4 Teile Triethylorthoformiat und 17,6 Teile Butylacetat vorgelegt. Unter Stickstoffüberschleierung und rühren wird eine Mischung aus 18,2 Teile Bis-[3-(trimethoxysilyl)propyl]amin (Dynasylan 1124, Firma Degussa, Rheinfelden) und 8,4 Teile N-[-3-(trimethoxysilyl)-propyll-butylamin (Dynasylan 1189, Firma Degussa, Rheinfelden) so zudosiert, das 50°C nicht überschritten werden. Nach Ende der Dosierung wird die Reaktionstemperatur für 60 Minuten bei 50°C gehalten. Der Blockierungsgrad wird mittels Titration überprüft (ωNCO=8,3%). Der Härter weist einen nichtflüchtigen Anteil von 80 Gew.-% auf.

**Herstellung eines Härters (B3) mit einem Umsetzungsgrad der Isocyanatgruppen von c=30mol% und 70 mol% Monosilan-Struktureinheiten (I) und 30 mol% Bissilan-Struktureinheiten (II)**

In einem Dreihalsglaskolben, ausgestattet mit einem Rückflußkühler und einem Thermometer, werden 55,4 Teile trimerisiertes Hexamethylendiisocyanat (HDI) (Desmodur N3600, Firma Bayer Material Science), 2,4 Teile Triethylorthoformiat und 17,6 Teile Butylacetat vorgelegt. Unter Stickstoffüberschleierung und rühren wird eine Mischung aus 9,5 Teile Bis-[3-(trimethoxysilyl)propyl]amin (Dynasylan 1124, Firma Degussa, Rheinfelden) und 15,2 Teile N-[-3-(trimethoxysilyl)-propyl]-butylamin (Dynasylan 1189, Firma Degussa, Rheinfelden) so zudosiert, das 50°C nicht überschritten werden. Nach Ende der Dosierung wird die Reaktionstemperatur für 60 Minuten bei 50°C gehalten. Der Blockierungsgrad wird mittels Titration überprüft (ωNCO=8,6%). Der Härter weist einen nichtflüchtigen Anteil von 80 Gew.-% auf.

**Härter (B4)**

Als Härter (B4) wird das handelsübliche trimerisierte Hexamethylendiisocyanat (HDI) (Desmodur N3600, Firma Bayer Material Science) eingesetzt.

**Herstellung der Beschichtungsmittel der Beispiele 1 bis 4 und der Vergleichsbeispiele V1 bis V8**

Aus den in Tabelle 3 angegebenen Komponenten werden die Klarlacke der erfindungsgemäßen Beispiele 1 bis 4 und die Klarlacke der Vergleichsbeispiele V1 bis V8 dadurch hergestellt, dass die in Tabelle 3 angegebenen Komponenten vereinigt und solange verrührt werden, bis eine homogene Mischung entsteht.

Die Prüfung der Eigenschaften der Beschichtung erfolgte nach pneumatischer Applikation der Beschichtungsmittel bei 2,5 bar in drei Spritzgängen auf einem handelsüblichen Wasserbasislack schwarz uni der Firma BASF Coatings AG. Der Basislack wurde zuvor auf handelsübliche gebonderte Stahlbleche der Firma Chemetall, die mit einer handelsüblichen, eingebrannten Elektrotauchlackierung der Firma BASF Coatings AG und einem handelsüblichen, eingebrannten Primer der Firma BASF Coatings AG beschichtet wurden, appliziert. Danach wird die jeweils resultierende Beschichtung 5 Minuten bei Raumtemperatur abgelüftet und anschließend bei 140°C 22 Minuten eingebrannt.

Die Kratzfestigkeit der Oberflächen der resultierenden Beschichtungen wurde mit Hilfe des Crockmeter-Tests (in Anlehnung an EN ISO 105-X12 mit 10 Doppelhüben und 9N Auflagekraft unter Verwendung von 9um Schleifpapier (3M 281Q wetordryTMproductionTM), unter anschließender Bestimmung des Restglanzes bei 20° mit einem handelsüblichen Glanzgerät bestimmt.

Die Erichsentiefung der resultierenden Beschichtungen wurde nach DIN EN ISO 1520 bestimmt.

Die Prüfung der Steinschlagschutzeigenschaften erfolgte gemäß ISO 20567-1:2007-1 mit 2-mal 500g Beschussmaterial und 2 bar Druck. Die geschädigte Fläche wird visuell beurteilt, wobei der Kennwert 0,5 der beste Wert mit der geringsten geschädigten Fläche und der Kennwert 5,0 der schlechtste Wert mit der größten geschädigten Fläche bedeutet.

Tabelle 3: Zusammensetzung der Beschichtungsmittel der erfindungsgemäßen Beispiele 1 bis 4 und der Vergleichsbeispiele V1 bis V8 in Gewichtsteilen

| Beispiel | V1 | V2 | V3 | V4 | 1 | 2 | V5 | V6 | V7 | V8 | 3 | 4 |
|---|---|---|---|---|---|---|---|---|---|---|---|---|
| Acrylat A4 (Vgl.) | 70 | 70 | 70 | | | | | | | | | |
| Acrylat A3 | | | | 70 | 70 | 70 | | | | | | |
| Acrylat A2 (Vgl.) | | | | | | | 75,8 | 75,8 | 76 | | | |
| Acrylat A1 | | | | | | | | | | 70 | 70 | 70 |
| Butylacetat | 38,9 | 38,3 | 38 | 38,9 | 38 | 37,7 | 23,0 | 22,7 | 22 | 29 | 28,5 | 28,2 |
| Dynoadd F1 | 0,2 | 0,2 | 0,2 | 0,2 | 0,2 | 0,2 | 0,2 | 0,2 | 0,2 | 0,2 | 0,2 | 0,2 |
| Tinuvin® 384 | 1,1 | 1,1 | 1,1 | 1,1 | 1,1 | 1,1 | 1,1 | 1,1 | 1,1 | 1,1 | 1,1 | 1,1 |
| Tinuvin® 292 | 1,0 | 1,0 | 1,0 | 1,0 | 1,0 | 1,0 | 1,0 | 1,0 | 1,0 | 1,0 | 1,0 | 1,0 |
| Nacure® 4167 | 4,3 | 3,6 | 3,0 | 4,3 | 3,6 | 3,0 | 2,7 | 2,2 | 1,8 | 2,7 | 2,2 | 1,8 |
| Härter B1 (Vgl.) | 74,0 | | | 74,0 | | | 46,9 | | | 47 | | |
| Härter B2 | | 71,6 | | | 72 | | | 45,4 | | | 45,4 | |
| Härter B3 | | | 69 | | | 69,2 | | | 44 | | | 43,9 |

Dynoadd F1 = handelsübliches, mehrfunktionelles, oberflächenaktives Additiv der Firma HertfelderGmbH, Bielefeld
Tinuvin® 384 = handelsübliches Lichtschutzmittel auf Basis eines Benztriazols der Firma Ciba
Tinuvin® 292 = handelsübliches Lichtschutzmittel auf Basis eines sterisch gehinderten Amins der Firma Ciba
Nacure® 4167 = Katalysator auf Basis aminblockierten Phosphorsäure-teilester der Firma King Industries, nichtflüchtiger Anteil 25%

Tabelle 4: Eigenschaften der Lackkomponenten und Eigenschaften der resultierenden Beschichtungen der erfindungsgemäßen Beispiele 1 bis 4 und der Vergleichsbeispiele V1 bis V8

| Beispiel | V1 | V2 | V3 | V4 | 1 | 2 | V5 | V6 | V7 | V8 | 3 | 4 |
|---|---|---|---|---|---|---|---|---|---|---|---|---|
| Bindemittel | A4 | A4 | A4 | A3 | A3 | A3 | A2 | A2 | A2 | A1 | A1 | A1 [5] |
| Tg Bindemittel | 29°C | 29°C | 29°C | -27°C | -27°C | -27°C | 53°C | 53°C | 53°C | -6°C | -6°C | -6°C |
| OH-Zahl berech. (mgKOH/g) | 175 | 175 | 175 | 175 | 175 | 175 | 110 | 110 | 110 | 110 | 110 | 110 |
| Härter B1 (Vgl.) | 74,0 | | | 74,0 | | | 46,9 | | | 47 | | |
| Härter B2 | | 71,6 | | | 72 | | | 45,4 | 45,4 | | 45,4 | |
| Härter B3 | | | 69 | | | 69,2 | | | 44 | | | 43,9 |
| Monosilan (I): Bis-silan (II) (mol-%) | 10: 90 | 40: 60 | 70: 30 | 10: 90 | 40: 60 | 70: 30 | 10: 90 | 40: 60 | 70: 30 | 10: 90 | 40: 60 | 70: 30 |
| Masse-% Si 1) | 3,4 | 2,9 | 2,3 | 3,4 | 2,9 | 2,3 | 2,7 | 2,3 | 1,9 | 2,7 | 2,3 | 1,9 |

(fortgesetzt)

| Beispiel | V1 | V2 | V3 | V4 | 1 | 2 | V5 | V6 | V7 | V8 | 3 | 4 |
|---|---|---|---|---|---|---|---|---|---|---|---|---|
| Erichsen. (mm) 2) | 5,4 | 6,6 | 7,4 | 7,1 | 7,5 | 7,8 | 7,1 | 8,1 | 8,1 | 7,9 | 8,5 | 8,6 |
| Restglanz (%) 3) | 67% | 58% | 53% | 91 % | 80% | 73% | 37% | 27% | 18% | 52% | 45% | 40% |
| Steinschlag 4) | 2,0 | | | 2,0 | | | 2,0 | | | 1,5 | | |

1) = theoretisch berechneter Siliciumgehalt in Masse-%. Er wird aus den eingesetzten Rohstoffen dadurch berechnet, dass alle an das Silicium gebundenen organischen Reste abgezogen werden und die Sauerstoffatome am Silicium nur zur Hälfte berücksichtigt werden.
2) = Erichsentiefungswerte in mm, bestimmt nach DIN EN ISO 1520
3) = Restglanz nach Crockmeter in %
4) = visuelle Beurteilung der geschädigten Fläche nach Steinschlagprüfung

**Diskussion der Prüfergebnisse der Tabelle 4:**

Der Vergleich der Beispiele 1 und 2 mit dem Vergleichsbeispiel V4 zeigt, dass bei gleichem Bindemittel und gleichem Silanisierungsgrad (30mol-%) mit steigendem Anteil an Monosilan-Struktureinheiten (I) und entsprechend sinkendem Anteil an Bissilan-Struktureinheiten (II) die Erichsentiefung zunimmt. Gleichzeitig nimmt zwar auch die Kratzfestigkeit ab, bleibt auch im Beispiel 2 mit dem besten Wert der Erichsentiefung noch auf einem sehr hohen Niveau, d.h. es wird eine sehr gute Kratzfestigkeit erreicht.

Die gleiche Abhängigkeit der Kratzfestigkeit und der Erichsentiefung vom Verhältnis der Struktureinheiten (I) zu den Struktureinheiten (II) wird auch bei Vergleich der Beispiele 3 und 4 mit dem Vergleichsbeispiel V8 deutlich. Auch hier nimmt bei gleichem Bindemittel und gleichem Silanisierungsgrad mit steigendem Anteil an Monosilan-Struktureinheiten (I) und entsprechend sinkendem Anteil an Bissilan-Struktureinheiten (II) die Erichsentiefung zu und die Kratzfestigkeit ab.

Die gleiche Abhängigkeit der Kratzfestigkeit und der Erichsentiefung vom Verhältnis der Struktureinheiten (I) zu den Struktureinheiten (II) wird im übrigen auch bei Vergleich der Vergleichsbeispiele V1, V2 und V3 sowie bei Vergleich der Vergleichsbeispiele V5, V6 und V7 beobachtet.

Zu beachten ist hierbei auch, dass die Kratzfestigkeit der Beschichtung eben nicht nur durch die Verwendung der erfindungsgemäßen Vernetzer (B), sondern überraschenderweise auch durch die erfindungsgemäße Verwendung der (Meth) acrylatpolyole (A) mit einer Glasübergangstemperatur unter 10°C verbessert wird. So zeigt der Vergleich des Beispiels 1 mit dem Vergleichsbeispiel V2, dass bei gleichem Silanisierungsgrad und gleichem Verhältnis von 40 mol-% Monosilanstruktureinheiten (I) und 60 mol-% Bissilan-Struktureinheiten (II) sowie gleicher OH-Zahl der Bindemittel bei Verwendung der erfindungsgemäßen Bindemittel mit einer Glasübergangstemperatur unter 10°C wie im Beispiel 1 deutlich höhere Kratzfestigkeiten erreicht werden als bei Verwendung von Bindemitteln mit einer Glasübergangstemperatur von über 10°C wie im Vergleichsbeispiel V2. Trotz dieser erhöhten Kratzfestigkeit der Beschichtung des Beispiels 1 weist aber diese Beschichtung aufgrund des Einsatzes der erfindungsgemäßen Bindemittel mit einer Glasübergangstemperatur unter 10°C gleichzeitig auch eine gegenüber dem entsprechenden Vergleichsbeispiel V2 verbesserte Erichsentiefung auf.

Dies wird ebenfalls durch den Vergleich des Beispiels 3 mit dem Vergleichsbeispiel V6 bestätigt. Auch der Vergleich des Beispiels 3 mit dem Vergleichsbeispiel V6 zeigt, dass bei gleichem Silanisierungsgrad und gleichem Verhältnis von 40 mol-% Monosilanstruktureinheiten (I) und 60 mol-% Bissilan-Struktureinheiten (II) sowie gleicher OH-Zahl der Bindemittel bei Verwendung der erfindungsgemäßen Bindemittel mit einer Glasübergangstemperatur unter 10°C wie im Beispiel 3 deutlich höhere Kratzfestigkeiten erreicht werden als bei Verwendung von Bindemitteln mit einer Glasübergangstemperatur von über 10°C wie im Vergleichsbeispiel V6. Trotz dieser erhöhten Kratzfestigkeit der Beschichtung des Beispiels 3 weist aber diese Beschichtung gleichzeitig auch eine gegenüber dem entsprechenden Vergleichsbeispiel V6 verbesserte Erichsentiefung auf.

Entsprechend wird dies im übrigen auch durch den Vergleich des Beispiels 2 mit dem Vergleichsbeispiel V3 und durch den Vergleich des Beispiels 4 mit dem Vergleichsbeispiel V7 bestätigt.

Erst durch die erfindungsgemäße Kombination der Bindemittel mit einer Glasübergangstemperatur unter 10°C mit den erfindungsgemäßen Härtern (B), die mit den Struktureinheiten (I) und (II) modifiziert sind, gelingt es erfindungsgemäß Beschichtungsmittel und daraus hergestellte Beschichtungen zur Verfügung zu stellen, die sich sowohl durch eine hohe Kratzfestigkeit als auch gleichzeitig durch eine gute Erichsentiefung als auch durch gute Steinschlagschutzeigenschaften auszeichnen.

Die Prüfung der Langzeitkratzbeständigkeit, d.h. die Prüfung des Restglanzes der Beschichtungen nach mehrmals wiederholter Kratzbelastung, zeigte auch hier sehr gute Ergebnisse für die erfindungsgemäß hergestellten Beschichtungen.

**Herstellung der Beschichtungsmittel der Vergleichsbeispiele V9 bis V12**

Aus den in Tabelle 5 angegebenen Komponenten werden die Klarlacke der Vergleichsbeispiele V9 bis V12 dadurch hergestellt, dass die in Tabelle 5 angegebenen Komponenten vereinigt und solange verrührt werden, bis eine homogene Mischung entsteht. Analog zur Herstellung der Beschichtungen der Beispiele 1 bis 4 sowie der Vergleichsbeispiele V1 bis V8 werden die Beschichtungsmittel der Vergleichsbeispiele V9 bis V12 appliziert, gehärtet und die Kratzfestigkeit sowie die Steinschlagschutzeigenschaften geprüft. Die Ergebnisse sind in Tabelle 6 dargestellt.

Tabelle 5: Zusammensetzung der Beschichtungsmittel der erfindungsgemäßen Beispiele 1 bis 4 und der Vergleichsbeispiele V9 bis V12 in Gewichtsteilen

| | Vgl.beisp. V9 | Vgl.beisp. V10 | Vgl.beisp. V11 | Vgl.beisp. V12 |
|---|---|---|---|---|
| Acrylat A1 | 70 | | | |
| Acrylat A2(Vgl.) | | 75,8 | | |
| Acrylat A3 | | | 70 | |
| Acrylat A4(Vgl.) | | | | 70 |
| Butylacetat | 31,9 | 31,9 | 18,6 | 18,6 |
| Dynoadd F1 | 0,2 | 0,2 | 0,2 | 0,2 |
| Tinuvin 384 | 1,1 | 1,1 | 1,1 | 1,1 |
| Tinuvin 292 | 1,0 | 1,0 | 1,0 | 1,0 |
| Nacure 4167 | 4,3 | 4,3 | 2,7 | 2,7 |
| Härter B4 (Vgl.) | 27,1 | 27,1 | 17,2 | 17,2 |

Tabelle 6: Prüfergebnisse der Beschichtungen der Vergleichsbeispiele V9 bis V12

| | Vgl.beisp. V9 | Vgl.beisp. V10 | Vgl.beisp. V11 | Vgl.beisp. V12 |
|---|---|---|---|---|
| Acrylat | A1 | A2 | A3 | A4 |
| Tg (°C) | -6°C | 53°C | -27°C | 29°C |
| OHZ (mgKOH/g) | 110 | 110 | 175 | 175 |
| Härter | B4 | B4 | B4 | B4 |
| Masse-% Si 1) | -- | -- | -- | -- |
| Crockmeter Restglanz (%) 2) | 18% | 0% | 37% | 14% |
| Steinschlag3) | 1,5 | 2,5 | 1,5 | 2,0 |

Erläuterungen zu Tabelle 6:
1) = theoretisch berechneter Siliciumgehalt (entspricht dem in der thermogravimetrischen Analyse erwarteten Siliciumgehalt) in Masse-%. Er wird aus den eingesetzten Rohstoffen dadurch berechnet, dass alle an das Silicium gebundenen organischen Reste abgezogen werden und die Sauerstoffatome am Silicium nur zur Hälfte berücksichtigt werden.
2) = Restglanz nach Crockmeter in %
3) = visuelle Beurteilung der geschädigten Fläche nach Steinschlagprüfung

**Diskussion der Prüfergebnisse der Tabelle 6:**

Der Vergleich des Vergleichsbeispiels V9 mit dem Vergleichsbeispiels V10 zeigt auch hier den bereits bei der

Diskussion der Prüfergebnisse der Tabelle 4 gefundenen Effekt, dass bei gleichem Vernetzer (B) und gleicher OH-Zahl der Bindemittel bei Verwendung der erfindungsgemäßen Bindemittel mit einer Glasübergangstemperatur unter 10°C wie im Vergleichsbeispiel V9 bzw. V11 deutlich höhere Kratzfestigkeiten erreicht werden als bei Verwendung von Bindemitteln mit einer Glasübergangstemperatur von über 10°C wie im Vergleichsbeispiel V10 bzw. V12.

Gleichzeitig verdeutlichen diese Vergleichsbeispiele V9 bis V12 aber, dass nur über die Auswahl der Bindemittel keine ausreichenden Kratzfestigkeiten erreicht werden, sondern dass dies erst durch Kombination mit den erfindungsgemäßen Vernetzern (B) erreicht wird. Abschließend sei aber hier nochmals darauf hingewiesen, dass es aber auch bei der Vernetzerauswahl erfindungswesentlich ist, dass nicht nur Vernetzer mit Silangruppen eingesetzt werden, sondern dass die Vernetzer mit der erfindungsgemäßen Mischung der Struktureinheiten (I) und (II) modifiziert sind, da nur so gewährleistet ist, dass gleichzeitig mit der guten Kratzfestigkeit auch entsprechend gute Erichsentiefungswerte erreicht werden (vgl. Diskussion der Prüfergebnisse der Tabelle 4).

**Patentansprüche**

1. Beschichtungsmittel, enthaltend

(A) mindestens ein hydroxylgruppenhaltiges Polyacrylat und/oder mindestens ein hydroxylgruppenhaltiges Polymethacrylat und
(B) mindestens eine isocyanatgruppenhaltige Verbindung mit mindestens einer Struktureinheit (I) der Formel (I)

$$-NR-(X-SiR''x(OR')3-x) \quad (I),$$

und mit mindestens einer Struktureinheit (II) der Formel (II)

$$-N(X-SiR''x(OR')3-x)n(X'-SiR''y(OR')3-y)m \qquad (II),$$

wobei

R = Wasserstoff, Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl ,
R' = Wasserstoff, Alkyl oder Cycloalkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R' = Ethyl und/oder Methyl,
X, X' = linearer und/oder verzweigter Alkylen oder Cycloalkylenrest mit 1 bis 20 Kohlenstoffatomen, bevorzugt X, X' = Alkylenrest mit 1 bis 4 Kohlenstoffatomen,
R'' = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R'' = Alkylrest, insbesondere mit 1 bis 6 C-Atomen,
n = 0 bis 2,
m = 0 bis 2,
m + n = 2, sowie
x, y = 0 bis 2

ist,

**dadurch gekennzeichnet, dass**

(i) das als Komponente (A) eingesetzte hydroxylgruppenhaltige Polyacrylat und/oder das hydroxylgruppenhaltige Polymethacrylat eine Glasübergangstemperatur, bestimmt mit Hilfe von DSC-Messungen nach ISO 11357-2, von weniger als 10°C aufweist,
(ii) die isocyanatgruppenhaltige Verbindung (B) mehr als 10 mol% bis 90 mol-% mindestens einer Struktureinheit der Formel (I) und 10 bis weniger als 90 mol% mindestens einer Struktureinheit der Formel (II) aufweist, jeweils bezogen auf die Gesamtheit der Struktureinheiten (I) und (II), und

(iii) 10 bis 60 mol-% der Isocyanatgruppen des Di- und/oder Polyisocyanat-Grundkörpers der Verbindung (B) zu den Struktureinheiten der Formeln (I) und (II) umgesetzt worden sind.

2. Beschichtungsmittel nach Anspruch 1, **dadurch gekennzeichnet, dass** das als Komponente (A) eingesetzte hydroxylgruppenhaltige Polyacrylat und/oder das hydroxylgruppenhaltige Polymethacrylat eine Glasübergangstemperatur Tg, bestimmt mit Hilfe von DSC-Messungen nach ISO 11357-2, von -60°C bis 5°C aufweist.

3. Beschichtungsmittel nach Anspruch 1 oder 2, **dadurch gekennzeichnet, dass** das als Komponente (A) eingesetzte hydroxylgruppenhaltige Polyacrylat und/oder das hydroxylgruppenhaltige Polymethacrylat eine Glasübergangstemperatur Tg, bestimmt mit Hilfe von DSC-Messungen nach ISO 11357-2, von -30°C bis < 0°C aufweist.

4. Beschichtungsmittel nach einem der Ansprüche 1 bis 3, **dadurch gekennzeichnet, dass** die isocyanatgruppenhaltige Verbindung (B) 20 bis 80 mol-% mindestens einer Struktureinheit der Formel (I) und 80 bis 20 mol-% mindestens einer Struktureinheit der Formel (II), jeweils bezogen auf die Gesamtheit der Struktureinheiten (I) und (II), aufweist.

5. Beschichtungsmittel nach einem der Ansprüche 1 bis 4, **dadurch gekennzeichnet, dass** die isocyanatgruppenhaltige Verbindung (B) 30 bis 70 mol-% mindestens einer Struktureinheit der Formel (I) und 70 bis 30 mol-% mindestens einer Struktureinheit der Formel (II), jeweils bezogen auf die Gesamtheit der Struktureinheiten (I) und (II), aufweist.

6. Beschichtungsmittel nach einem der Ansprüche 1 bis 3, **dadurch gekennzeichnet, dass** das Beschichtungsmittel einen berechneten Silicium Gehalt von 1,5 Massen-% bis 6,0 Massen-% Si, jeweils bezogen auf den Feststoffgehalt des Beschichtungsmittels, aufweist.

7. Beschichtungsmittel nach einem der Ansprüche 1 bis 6, **dadurch gekennzeichnet, dass** das zur Herstellung der isocyanatgruppenhaltigen Verbindung (B) eingesetzte Di- und/oder Polyisocyanat eine Glasübergangstemperatur, bestimmt mit Hilfe von DSC-Messungen nach ISO 11357-2, von kleiner gleich 0°C aufweist.

8. Beschichtungsmittel nach einem der Ansprüche 1 bis 7, **dadurch gekennzeichnet, dass** das zur Herstellung der isocyanatgruppenhaltigen Verbindung (B) eingesetzte Di- und/oder Polyisocyanat 1,6-Hexamethylendüsocyanat und/oder deren Isocyanurat-Trimere und/oder deren Allophanat-Dimere ist.

9. Beschichtungsmittel nach einem der Ansprüche 1 bis 8, **dadurch gekennzeichnet, dass** die isocyanatgruppenhaltige Verbindung (B) dadurch hergestellt worden ist, dass
Diisocyanate und/oder Polyisocyanate mit mindestens einer Verbindung der Formel (Ia)

$$H\text{-}NR\text{-}(X\text{-}SiR''x(OR')3\text{-}x) \qquad (Ia)$$

und mit mindestens einer Verbindung der Formel (IIa)

$$HN(X\text{-}SiR''x(OR')3\text{-}x)n(X'\text{-}SiR''y(OR')3\text{-}y)m \qquad (IIa),$$

umgesetzt worden sind, wobei die Substituenten die in Anspruch 1 genannte Bedeutung haben.

10. Beschichtungsmittel nach einem der Ansprüche 1 bis 9, **dadurch gekennzeichnet, dass** das Beschichtungsmittel von 20 bis 80 Gew.-%, jeweils bezogen auf den Feststoffgehalt des Beschichtungsmittel, mindestens eines hydroxylgruppenhaltigen Polyacrylates (A) und/oder mindestens eines hydroxylgruppenhaltigen Polymethacrylates (A) enthält.

11. Beschichtungsmittel nach einem der Ansprüche 1 bis 10, **dadurch gekennzeichnet, dass** das hydroxylgruppenhaltige Polyacrylat und/oder das hydroxylgruppenhaltige Polymethacrylat erhältlich ist, indem

(a) 10 bis 80 Gew.- % eines hydroxylgruppenhaltigen Esters der Acrylsäure oder Mischungen dieser Monomeren,
(b) 0 bis 30 Gew.- % eines von (a) verschiedenen hydroxylgruppenhaltigen Esters der Methacrylsäure oder

eines Gemisches aus solchen Monomeren,
(c) 5 bis 90 Gew.- % eines von (a) und (b) verschiedenen aliphatischen oder cycloaliphatischen Esters der (Meth)acrylsäure mit mindestens 4 Kohlenstoffatomen im Alkoholrest oder eines Gemisches aus solchen Monomeren,
(d) 0 bis 5 Gew.- % einer ethylenisch ungesättigten Carbonsäure oder einer Mischung aus ethylenisch ungesättigten Carbonsäuren,
(e) 0 bis 50 Gew.- % eines Vinylaromaten oder eines Gemisches aus solchen Monomeren und
(f) 0 bis 50 Gew.- % eines von (a), (b), (c), (d) und (e) verschiedenen ethylenisch ungesättigten Monomeren oder eines Gemisches aus solchen Monomeren

copolymerisiert werden, wobei die Summe der Gewichtsanteile der Komponenten (a), (b), (c), (d), (e) und (f) stets 100 Gew.-% ergibt.

**12.** Beschichtungsmittel nach einem der Ansprüche 1 bis 11, **dadurch gekennzeichnet, dass** das Beschichtungsmittel mindestens einen phosphor- und stickstoffhaltigen Katalysator enthält.

**13.** Mehrstufiges Beschichtungsverfahren, **dadurch gekennzeichnet, dass** auf ein gegebenenfalls vorbeschichtetes Substrat eine pigmentierte Basislackschicht und danach eine Schicht aus dem Beschichtungsmittel nach einem der Ansprüche eins bis 12 aufgebracht wird.

**14.** Mehrstufiges Beschichtungsverfahren nach Anspruch 13, **dadurch gekennzeichnet, dass** nach Auftrag der pigmentierten Basislackschicht der aufgebrachte Basislack zunächst bei Temperaturen von Raumtemperatur bis 80°C getrocknet wird und nach dem Auftrag des Beschichtungsmittel als nach einem der Ansprüche eins bis 10 bei Temperaturen von 30 bis 200°C während einer Zeit von einer Minute bis zu 10 Stunden gehärtet wird.

**15.** Verwendung der Beschichtungsmittel nach einem der Ansprüche 1 bis 12 als Klarlack beziehungsweise Anwendung des Verfahrens nach Anspruch 13 oder 14 für die Automobilserienlackierung, die Lackierung von Automobil-Anbauteilen und die Autoreparaturlackierung.

**16.** Effekt- und/oder farbgebende mehrschichtige Lackierung aus mindestens einer pigmentierten Basislackschicht und mindestens einer darauf angeordneten Klarlackschicht, **dadurch gekennzeichnet, dass** die Klarlackschicht aus einem Beschichtungsmittel nach einem der Ansprüche eins bis 12 hergestellt worden ist.

## Claims

**1.** Coating composition comprising

(A) at least one hydroxyl-containing polyacrylate and/or at least one hydroxyl-containing polymethacrylate and
(B) at least one compound containing isocyanate groups and having at least one structural unit (I) of the formula (I)

$$-NR-(X-SiR''x(OR')3-x) \quad (I),$$

and having at least one structural unit (II) of the formula (II)

$$-N(X-SiR''x(OR')3-x)n(X'-SiR''y(OR')3-y)m \quad (II),$$

where

R = hydrogen, alkyl, cycloalkyl, aryl or aralkyl, it being possible for the carbon chain to be interrupted by nonadjacent oxygen, sulfur or NRa groups, with Ra = alkyl, cycloalkyl, aryl or aralkyl,
R’ = hydrogen, alkyl or cycloalkyl, it being possible for the carbon chain to be interrupted by nonadjacent oxygen, sulfur or NRa groups, with Ra = alkyl, cycloalkyl, aryl or aralkyl, preferably R’ = ethyl and/or methyl,
X, X’ = linear and/or branched alkylene or cycloalkylene radical having 1 to 20 carbon atoms, preferably X, X’ = alkylene radical having 1 to 4 carbon atoms,

R'' = alkyl, cycloalkyl, aryl or aralkyl, it being possible for the carbon chain to be interrupted by nonadjacent oxygen, sulfur or NRa groups, with Ra = alkyl, cycloalkyl, aryl or aralkyl, preferably R'' = alkyl radical, more particularly having 1 to 6 C atoms,
n = 0 to 2,
m = 0 to 2,
m+n = 2, and
x,y = 0 to 2,

**characterized in that**

(i) the hydroxyl-containing polyacrylate and/or the hydroxyl-containing polymethacrylate used as component (A) have/has a glass transition temperature, determined with the aid of DSC measurements according to ISO 11357-2, of less than 10°C,
(ii) the compound (B) containing isocyanate groups contains more than 10 mol% to 90 mol% of at least one structural unit of the formula (I) and 10 to less than 90 mol% of at least one structural unit of the formula (II), based in each case on the entirety of the structural units (I) and (II), and
(iii) 10 to 60 mol% of the isocyanate groups of the diisocyanate and/or polyisocyanate parent structure of the compound (B) have been reacted to form the structural units of the formulae (I) and (II).

**2.** Coating composition according to Claim 1, **characterized in that** the hydroxyl-containing polyacrylate and/or the hydroxyl-containing polymethacrylate used as component (A) have/has a glass transition temperature Tg, determined with the aid of DSC measurements according to ISO 11357-2, of -60°C to 5°C.

**3.** Coating composition according to Claim 1 or 2, **characterized in that** the hydroxyl-containing polyacrylate and/or the hydroxyl-containing polymethacrylate used as component (A) have/has a glass transition temperature Tg, determined with the aid of DSC measurements according to ISO 11357-2, of -30°C to < 0°C.

**4.** Coating composition according to any of Claims 1 to 3, **characterized in that** the compound (B) containing isocyanate groups contains 20 to 80 mol% of at least one structural unit of the formula (I) and 80 to 20 mol% of at least one structural unit of the formula (II), based in each case on the entirety of the structural units (I) and (II).

**5.** Coating composition according to any of Claims 1 to 4, **characterized in that** the compound (B) containing isocyanate groups contains 30 to 70 mol% of at least one structural unit of the formula (I) and 70 to 30 mol% of at least one structural unit of the formula (II), based in each case on the entirety of the structural units (I) and (II).

**6.** Coating composition according to any of Claims 1 to 3, **characterized in that** the coating composition has a calculated silicon content of 1.5% to 6.0% by mass Si based in each case on the solids content of the coating composition.

**7.** Coating composition according to any of Claims 1 to 6, **characterized in that** the diisocyanate and/or polyisocyanate used to prepare the compound (B) containing isocyanate groups have/has a glass transition temperature, determined with the aid of DSC measurements according to ISO 11357-2, of less than or equal to 0°C.

**8.** Coating composition according to any of Claims 1 to 7, **characterized in that** the diisocyanate and/or polyisocyanate used to prepare the compound (B) containing isocyanate groups are/is 1,6-hexamethylene diisocyanate and/or the isocyanurate trimers thereof and/or the allophanate dimers thereof.

**9.** Coating composition according to any of Claims 1 to 8, **characterized in that** the compound (B) containing isocyanate groups has been prepared by reacting diisocyanates and/or polyisocyanates with at least one compound of the formula (Ia)

$$H-NR-(X-SiR''x(OR')3-x) \qquad (Ia)$$

and with at least one compound of the formula (IIa)

$$HN(X-SiR''x(OR')3-x)n(X'-SiR''y(OR')3-y)m \quad (IIa),$$

the substituents being as defined in Claim 1.

**10.** Coating composition according to any of Claims 1 to 9, **characterized in that** the coating composition contains from 20% to 80% by weight, based in each case on the solids content of the coating composition, of at least one hydroxyl-containing polyacrylate (A) and/or at least one hydroxyl-containing polymethacrylate (A).

**11.** Coating composition according to any of Claims 1 to 10, **characterized in that** the hydroxyl-containing polyacrylate and/or the hydroxyl-containing polymethacrylate are/is obtainable by copolymerizing

(a) 10% to 80% by weight of a hydroxyl-containing ester of acrylic acid, or mixtures of these monomers,
(b) 0% to 30% by weight of a hydroxyl-containing ester of methacrylic acid other than (a), or of a mixture of such monomers,
(c) 5% to 90% by weight of an aliphatic or cycloaliphatic ester of (meth)acrylic acid other than (a) and (b), having at least 4 carbon atoms in the alcohol residue, or of a mixture of such monomers,
(d) 0% to 5% by weight of an ethylenically unsaturated carboxylic acid or of a mixture of ethylenically unsaturated carboxylic acids,
(e) 0% to 50% by weight of a vinylaromatic or of a mixture of such monomers, and
(f) 0% to 50% by weight of an ethylenically unsaturated monomer other than (a), (b), (c), (d), and (e), or of a mixture of such monomers,

the sum of the weight fractions of components (a), (b), (c), (d), (e), and (f) always being 100% by weight.

**12.** Coating composition according to any of Claims 1 to 11, **characterized in that** the coating composition comprises at least one phosphorus and nitrogen catalyst.

**13.** Multistage coating process, **characterized in that** a pigmented basecoat is applied to an uncoated or precoated substrate and thereafter a coat of the coating composition according to any of Claims 1 to 12 is applied.

**14.** Multistage coating process according to Claim 13, **characterized in that**, following application of the pigmented basecoat, the applied basecoat material is dried first at temperatures of room temperature to 80°C, and, after the application of the coating composition according to any of Claims 1 to 10, the system is cured at temperatures of 30 to 200°C for a time of one minute up to 10 hours.

**15.** Use of the coating compositions according to any of Claims 1 to 12 as clearcoat or application of the process according to Claim 13 or 14 for automotive OEM finishing, the finishing of surface-mounted automotive components and automotive refinish.

**16.** Multicoat color and/or effect paint system comprising at least one pigmented basecoat and at least one clearcoat disposed thereon, **characterized in that** the clearcoat has been produced from a coating composition according to any of Claims 1 to 12.

## Revendications

**1.** Composition de revêtement, contenant

(A) au moins un polyacrylate contenant des groupes hydroxy et/ou au moins un polyméthacrylate contenant des groupes hydroxy et
(B) au moins un composé contenant des groupes isocyanate, comportant un moins un motif structural (I) de formule (I)

$$-NR-(X-SiR''_x(OR')_{3-x}) \quad (I),$$

et comportant au moins un motif structural (II) de formule (II)

$$-N(X-SiR''_x(OR')_{3-x})_n(X'-SiR''_y(OR')_{3-y})_m \qquad (II),$$

où

R = un atome d'hydrogène, un radical alkyle, cycloalkyle, aryle ou aralkyle, dans lequel la chaîne carbonée peut être interrompue par des atomes d'oxygène, de soufre ou des groupes NRa, non contigus, où Ra = alkyle, cycloalkyle, aryle ou aralkyle,
R' = un atome d'hydrogène, un radical alkyle ou cycloalkyle, dans lequel la chaîne carbonée peut être interrompue par des atomes d'oxygène, de soufre ou des groupes NRa, non contigus, où Ra = alkyle, cycloalkyle, aryle ou aralkyle, de préférence R' = éthyle et/ou méthyle,
X, X' = un radical alkylène ou cycloalkylène linéaire et/ou ramifié ayant de 1 à 20 atomes de carbone, de préférence X, X' = un radical alkylène ayant de 1 à 4 atomes de carbone,
R" = un radical alkyle, cycloalkyle, aryle ou aralkyle, dans lequel la chaîne carbonée peut être interrompue par des atomes, d'oxygène, de soufre ou des groupes NRa, non contigus, où Ra = alkyle, cycloalkyle, aryle ou aralkyle, de préférence R" = un radical alkyle, en particulier ayant de 1 à 6 atomes de carbone,
n est 0 à 2,
m est 0 à 2,
m + n = 2, ainsi que
x, y = 0 à 2,

**caractérisée en ce que**

(i) le polyacrylate contenant des groupes hydroxy, et/ou le polyméthacrylate contenant des groupes hydroxy, utilisé(s) en tant que composant (A), présente(nt) une température de transition vitreuse, déterminée à l'aide de mesures de DSC selon ISO 11357-2, de moins de 10 °C.
(ii) le composé (B) contenant des groupes isocyanate comporte plus de 10 % en moles à 90 % en moles d'au moins un motif structural de formule (I) et de 10 à moins de 90 % en moles d'au moins un motif structural de formule (II), chaque fois par rapport à la totalité des motifs structuraux (I) et (II), et
(iii) 10 à 60 % en moles des groupes isocyanate du corps de base di- et/ou polyisocyanate du composé (B) ont été convertis en les motifs structuraux de formules (I) et (II).

**2.** Composition de revêtement selon la revendication 1, **caractérisée en ce que** le polyacrylate contenant des groupes hydroxy et/ou le polyméthacrylate contenant des groupes hydroxy, utilisé(s) en tant que composant (A), présente (nt) une température de transition vitreuse Tg, déterminée à l'aide de mesures de DSC selon ISO 11357-2, de -60 °C à 5 °C.

**3.** Composition de revêtement selon la revendication 1 ou 2, **caractérisée en ce que** le polyacrylate contenant des groupes hydroxy, et/ou le polyméthacrylate contenant des groupes hydroxy, utilisé(s) en tant que composant (A), présente(nt) une température de transition vitreuse Tg, déterminée à l'aide de mesures de DSC selon ISO 11357-2, de -30 °C à < 0 °C.

**4.** Composition de revêtement selon l'une quelconque des revendications 1 à 3, **caractérisée en ce que** le composé (B) contenant des groupes isocyanate comporte de 20 à 80 % en moles d'au moins un motif structural de formule (I) et de 80 à 20 % en moles d'au moins un motif structural de formule (II), chaque fois par rapport à la totalité des motifs structuraux (I) et (II).

**5.** Composition de revêtement selon l'une quelconque des revendications 1 à 4, **caractérisée en ce que** le composé (B) contenant des groupes isocyanate comporte de 30 à 70 % en moles d'au moins un motif structural de formule (I) et de 70 à 30 % en moles d'au moins un motif structural de formule (II), chaque fois par rapport à la totalité des motifs structuraux (I) et (II).

**6.** Composition de revêtement selon l'une quelconque des revendications 1 à 3, **caractérisée en ce que** la composition de revêtement présente une teneur calculée en silicium de 1,5 % en masse à 6,0 % en masse de Si, chaque fois par rapport à la teneur en matière solide de la composition de revêtement.

**7.** Composition de revêtement selon l'une quelconque des revendications 1 à 6, caractérisée en ce le diisocyanate et/ou le polyisocyanate, utilisé(s) pour la préparation du composé (B) contenant des groupes isocyanate, présente (nt) une température de transition vitreuse, déterminée à l'aide de mesures de DSC selon ISO 11357-2, inférieure ou égale à 0 °C.

**8.** Composition de revêtement selon l'une quelconque des revendications 1 à 7, caractérisée en ce le diisocyanate et/ou le polyisocyanate, utilisé(s) pour la préparation du composé (B) contenant des groupes isocyanate, consiste (nt) en 1,6-hexaméthylène-diisocyanate et/ou ses trimères isocyanurate et/ou ses dimères allophanate.

**9.** Composition de revêtement selon l'une quelconque des revendications 1 à 8, **caractérisée en ce que** le composé (B) contenant des groupes isocyanate a été préparé par
mise en réaction de diisocyanates et/ou polyisocyanates avec au moins un composé de formule (Ia)

$$H\text{-}NR\text{-}(X\text{-}SiR''_x(OR')_{3-x}) \qquad (Ia),$$

et avec au moins un composé de formule (IIa)

$$HN(X\text{-}SiR''_x(OR')_{3-x})_n(X'\text{-}SiR''_y(OR')_{3-y})_m \qquad (IIa),$$

les substituants ayant la signification indiquée dans la revendication 1.

**10.** Composition de revêtement selon l'une quelconque des revendications 1 à 9, **caractérisée en ce que** la composition de revêtement contient de 20 à 80 % en poids, chaque fois par rapport à la teneur en matière solide de la composition de revêtement, d'au moins un polyacrylate (A) contenant des groupes hydroxy et/ou d'au moins un polyméthacrylate (A) contenant des groupes hydroxy.

**11.** Composition de revêtement selon l'une quelconque des revendications 1 à 10, **caractérisée en ce qu'**il est possible d'obtenir le polyacrylate contenant des groupe hydroxy et/ou le polyméthacrylate contenant des groupes hydroxy en copolymérisant

(a) 10 à 80 % en poids d'un ester, contenant des groupes hydroxy, de l'acide acrylique ou de mélanges de tels monomères,
(b) 0 à 30 % en poids d'un ester, contenant des groupes hydroxy, différent de (a), de l'acide méthacrylique ou de mélanges de tels monomères,
(c) 5 à 90 % en poids d'un ester aliphatique ou cycloaliphatique, différent de (a) et (b), de l'acide (méth)acrylique, comportant au moins 4 atomes de carbone dans le radical alcool, ou d'un mélange de tels monomères,
(d) 0 à 5 % en poids d'un acide carboxylique à insaturation éthylénique ou d'un mélange d'acides carboxyliques à insaturation éthylénique,
(e) 0 à 50 % en poids d'un composé vinylaromatique ou d'un mélange de tels monomères et
(f) 0 à 50 % en poids d'un monomère à insaturation éthylénique différent de (a), (b), (c), (d) et (e), ou d'un mélange de tels monomères,

la somme des proportions en poids des composants (a), (b), (c), (d), (e) et (f) étant toujours égale à 100 % en poids.

**12.** Composition de revêtement selon l'une quelconque des revendications 1 à 11, **caractérisée en ce que** la composition de revêtement contient au moins un catalyseur phosphoré ou azoté.

**13.** Procédé d'enduction en plusieurs étapes, **caractérisée en ce que** sur un subjectile éventuellement pré-enduit on applique une couche de peinture de fond pigmentée et ensuite une couche de la composition de revêtement selon l'une quelconque des revendications un à 12.

**14.** Procédé d'enduction en plusieurs étapes selon la revendication 13, **caractérisée en ce qu'**après application de la couche de peinture de fond pigmentée la peinture de fond appliquée est d'abord séchée à des températures dans la plage allant de la température ambiante à 80 °C, et après l'application de la composition de revêtement telle que selon l'une quelconque des revendications un à 10, est durcie à des températures de 30 à 200 °C pendant une

durée allant d'une minute à 10 heures.

**15.** Utilisation de la composition de revêtement selon l'une quelconque des revendications 1 à 12, en tant que vernis ou utilisation du procédé selon la revendication 13 ou 14, pour la mise en peinture en série d'automobiles, le peinturage de pièces de construction d'automobiles et le peinturage de réparation d'automobiles.

**16.** Revêtement de peinture colorant et/ou à effet, constitué d'au moins une couche de peinture de fond pigmentée et d'au moins une couche de vernis disposée sur celle-ci, **caractérisé en ce que** la couche de vernis a été produite à partir d'une composition de revêtement selon l'une quelconque des revendications un à 12.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 200198393 A
- US 2006217472 A
- EP 1273640 A
- WO 0874491 A
- WO 0874490 A
- WO 0874489 A
- DE 102007061855943
- DE 102008060454243
- EP 692007 B
- WO 07016234 A
- US 4598131 A
- EP 0626888 A
- EP 0692007 A
- WO 0503340 A
- DE 102005045228 A
- US 4710542 A
- EP 0245700 B
- WO 9422968 A
- EP 0276501 A
- EP 0249201 A
- WO 9712945 A
- EP 0008127 A


### In der Beschreibung aufgeführte Nicht-Patentliteratur


- **B. SINGH ; MITARBEITER.** Carbamylmethylated Melamines, Novel Crosslinkers for the Coatings Industry. *Advanced Organic Coatings Science and Technology Series,* 1991, vol. 13, 193-207
- Lacke und Druckfarben. Römpp Lexikon. Georg Thieme Verlag, 1998, 250-252